(19) **Europäisches Patentamt / European Patent Office / Office européen des brevets**

(11) **EP 1 679 687 B1**

(12) **EUROPEAN PATENT SPECIFICATION**

(45) Date of publication and mention
of the grant of the patent:
**13.06.2012 Bulletin 2012/24**

(51) Int Cl.:
***G09G 3/32*** *(2006.01)*

(21) Application number: **06100105.3**

(22) Date of filing: **05.01.2006**

(54) **Display device and driving method thereof**

Anzeigevorrichtung und Verfahren zu ihrer Ansteuerung

Dispositif d'affichage et son procédé de commande

(84) Designated Contracting States:
**AT BE BG CH CY CZ DE DK EE ES FI FR GB GR HU IE IS IT LI LT LU LV MC NL PL PT RO SE SI SK TR**

(30) Priority: **05.01.2005 KR 2005000759**

(43) Date of publication of application:
**12.07.2006 Bulletin 2006/28**

(73) Proprietor: **Samsung Mobile Display Co., Ltd.**
**Suwon-si**
**Gyeonggi-do (KR)**

(72) Inventors:
• **Park, Sung-Chon**
**Legal & IP Team**
**Kiheung-Eup,**
**Yongin-City,**
**Kyeonggi-Do (KR)**

• **Kwak, Won-Kyu**
**Legal & IP Team**
**Kiheung-Eup,**
**Yongin-City,**
**Kyeonggi-Do (KR)**
• **Kim, Yang-Wan**
**Legal & IP Team**
**Kiheung-Eup,**
**Yongin-City,**
**Kyeonggi-Do (KR)**

(74) Representative: **Hengelhaupt, Jürgen et al**
**Gulde Hengelhaupt Ziebig & Schneider**
**Patentanwälte - Rechtsanwälte**
**Wallstrasse 58/59**
**10179 Berlin (DE)**

(56) References cited:
| | |
|---|---|
| EP-A- 1 331 627 | EP-A- 1 600 924 |
| EP-A2- 1 441 325 | JP-A- 2003 122 306 |
| US-A1- 2001 022 565 | US-A1- 2004 070 557 |
| US-A1- 2004 252 084 | US-B1- 6 421 033 |

## Description

## BACKGROUND OF THE INVENTION

### Field of the Invention

The present invention relates to a display device and a driving method thereof, and more particularly, to an organic light emitting diode (OLED) display device and a driving method thereof.

### Description of the Related Art

In general, the organic light emitting diode display device is a display device for electrically exciting phosphorous organic matter and emitting light. The organic light emitting diode display device drives organic light emission cells arranged in a matrix format to represent images. An organic light emission cell having a diode characteristic is referred to as an organic light emitting diode (OLED) and has a structure including an anode electrode layer, an organic thin film, and a cathode electrode layer. Holes and electrons injected through the anode electrode and the cathode electrode are combined on the organic thin film, and emit light. The organic light emission cell emits different amounts of light according to injected amounts of electrons and holes, that is, depending on the applied current.

In a display device such as the organic light emitting diode display device, a pixel includes a plurality of sub-pixels each of which has one of a plurality of colors (e.g., primary colors of light), and colors are represented through combinations of the colors emitted by the sub-pixels. In general, a pixel includes a sub-pixel for displaying red (R), a sub-pixel for displaying green (G), and a sub-pixel for displaying blue (B), and the colors are displayed by combinations of red, green, and blue (RGB) colors. Generally, the sub-pixels are arranged in an order of R, G, and B along a row direction.

Each sub-pixel in the organic light emitting diode display device includes a driving transistor for driving the organic light emitting diode, a switching transistor, and a capacitor. Also, each sub-pixel has a data line for transmitting (or applying) a data signal, and a power line for transmitting (or applying) a power supply voltage. Therefore, many wires are required for transmitting (or applying) voltages or signals to the transistors and capacitors formed at each pixel. It is difficult to arrange such wires in the pixel, and the aperture ratio corresponding to a light emission area of the pixel is reduced.

JP 2003 122306 discloses an active type OLED display device, in which a pixel circuit is provided in common for two organic light emitting elements using two scan drivers. EP 1 600 924 A1 discloses line scan drivers for an OLED display in which a first and a second pixel share a data line, a select scan line and a driving element. EP 1 441 325 A2 discloses a luminescent display with a circuit for compensating threshold variations of transistors in a pixel circuit.

## SUMMARY OF THE INVENTION

One exemplary embodiment of the present invention provides a display device for improving an aperture ratio.

Another exemplary embodiment of the present invention provides a display device for simplifying the arrangement of wires and elements in unit pixels.

Still another exemplary embodiment of the present invention provides a display device for reducing a number of select scan lines.

Further, another exemplary embodiment of the present invention provides a scan driver for reducing a number of flip-flops.

In one aspect of the present invention, a display device including a plurality of unit pixels is provided, the plurality of unit pixels being arranged in rows for displaying an image during a field of a video signal, the field being divided into a plurality of subfields including a first subfield and a second subfield, and each of the unit pixels including a plurality of light emitting diode elements including first and second light emitting diode elements, a plurality of emission control transistors, the plurality of light emitting diode elements of the one unit pixel being arranged in a column direction and having a cathode directly connected to a power supply voltage, wherein each light emitting diode element is connected to a drain of a corresponding emission control transistor; a plurality of data lines extending in the column direction and for transmitting data signals; a plurality of select scan lines extending in a row direction and for transmitting select signals, each of the select scan lines being coupled to a corresponding one of the rows of the unit pixels; a plurality of emit scan lines for transmitting emission control signals, each of the emit scan lines being coupled to a gate of a corresponding one of the emission control transistors; and a data driver for transmitting a data signal to at least one of the data lines of the unit pixels coupled to a corresponding one of the select lines to which one of the select signals is applied, and a scan driver for applying the select signals to the select scan lines (S1-Sn) and for applying the emission control signals to the emit scan lines, in each of the plurality of subfields. The scan driver comprises a first shift register for sequentially outputting the plurality of select signals in each of the plurality of subfields, and a second shift register for sequentially outputting the first and second emission control signals. Furthermore, a pixel driver is provided for each of the unit pixels for storing the corresponding one of the data signals in response to a first pulse of a corresponding one of the select signals in each of the plurality of subfields, and for outputting a driving current corresponding to the corresponding one of the data signals. The pixel driver comprises a driving transistor having a source, a gate, and a drain, for providing a driving current corresponding to a voltage between the source and the gate and flowing from the drain, a first capacitor having a first and a second electrode for storing a voltage corresponding to the corresponding one of the data signals; and a switching transistor having a source, a drain and a gate for transmitting the corresponding one of the data signals to the first capacitor in response to the first pulse of the corresponding one of the select signals, wherein the switching transistor is coupled with its source to the corresponding data line, with its gate to the corresponding select scan line and with its drain to the second electrode of the first capacitor. The first capacitor is coupled with its first electrode to the source of the driving transistor and with its second electrode to the gate of the driving transistor, The driving transistor is coupled with its source to a power line providing a power supply voltage, with its gate to the drain of the switching transistor, and with its drain to the source of the plurality of emission control transistors. At least one unit pixel of the unit pixels is adapted to receive the corresponding one of the data signals in response to the first pulse of the corresponding one of the select signals. The driving transistor of the at least one unit pixel supplies a driving current to the first light emitting diode element included in the at least one unit pixel in response to an emit pulse of the corresponding emission control signal such that the first light emitting diode element emits light in the first subfield, and the driving transistor of the at least one unit pixel supplies a driving current to the second light emitting diode element included in the at least one unit pixel in response to an emit pulse of the corresponding emission control signal such that the second light emitting diode element emits light in the second subfields. The first shift register is adapted to receive a clock signal, the inverted clock signal and a first start signal, and comprises a first chain of flip-flops, wherein a first flip-flop of the first chain of flip-flops has the first start signal, the clock signal and the inverted clock signal as input, a subsequent flip-flop has the output of the previous flip-flop, the clock signal and the inverted clock signal as input, wherein the outputs of two adjacent flip-flops of the first chain of flip-flops are inputted to a NAND-gate, which generates a select signal. The second shift register is adapted to receive the clock signal, the inverted clock signal and a second start signal as input and comprises a second chain of flip-flops, wherein a first flip-flop of the second chain of flip-flops has the second start signal, the clock signal and the inverted clock signal as input, a subsequent flip-flop has the output of the previous flip-flop in the second chain, the clock signal and the inverted clock signal as input, wherein the output of each flip-flop of the second chain of flip-flops is the second emit signal and the first emit signal, corresponds to the second emit signal inverted.

The pixel driver may further comprise a second capacitor for storing a threshold voltage of the driving transistor, the second capacitor having a first and a second electrode and being coupled with its first electrode to the second electrode of the first capacitor and with its second electrode to the gate of the driving transistor, a third transistor coupled between the gate and the drain of the driving transistor and coupled with its gate to the previous one of the select scan lines, a fourth transistor coupled between the power line supplying the power supply voltage and the first electrode of the second capacitor and coupled with its gate to the previous one of the select scan lines, and wherein the voltage between the source and the gate of the driving transistor is determined by a voltage stored in the first and second capacitors.

## BRIEF DESCRIPTION OF THE DRAWINGS

The accompanying drawings illustrate exemplary embodiments of the present invention and examples useful for understanding the invention, and, together with the description, serve to explain the principles of the invention, wherein:

FIG. 1 shows a plan view of an organic light emitting diode display device according to a first exemplary embodiment of the present invention;

FIG. 2 shows a simplified circuit diagram of unit pixels of the organic light emitting diode display device shown in FIG. 1;

FIG. 3 shows a signal timing diagram of the organic light emitting display device according to the first exemplary embodiment of the present invention;

FIGs. 4 and 6 respectively show simplified circuit diagrams of unit pixels of organic light emitting diode display devices useful for understanding the invention;

FIG. 6 shows a second embodiment of the invention;

FIG. 7 shows a signal timing diagram in the unit pixel of FIG. 6;

FIG. 8 shows a scan driver in organic light emitting diode display devices according to the invention;

FIGs., 11, 13, 15, 17, 19, 21, 23, 24, 26 and 27 respectively show scan drivers in organic light emitting diode display devices as examples useful for understanding the invention;

FIGs. 9, 12, 14, 16, 18, 20, 22, 25, 28 respectively show signal timing diagrams in the scan drivers of FIGs. 8, 11, 13, 15, 17, 19, 21, 24, 26;

FIG. 10 shows a flip-flop used in a select scan driver of FIG. 8;

FIG. 29 shows a plan view of an organic light emitting diode display device useful for understanding the invention;

FIGs. 30A and 30B respectively show odd row and even row scan drivers in the organic light emitting diode display device as examples useful for understanding the invention; and

FIG. 31 shows a signal timing diagram of the odd row scan driver of FIG. 30A.

## DETAILED DESCRIPTION

In the following detailed description, only certain exemplary embodiments of the present invention are shown and described, simply by way of illustration together with examples useful for understanding the invention. As those skilled in the art would realize, the described embodiments may be modified in various different ways, all without departing from the scope of the present invention.

Accordingly, the drawings and description are to be regarded as illustrative in nature, and not restrictive. There may be parts shown in the drawings, or parts not shown in the drawings, that are not discussed in the specification as they are not essential to a complete understanding of the invention. Like reference numerals designate like elements. Phrases such as "one thing is coupled to another" can refer to either "a first one is directly coupled to a second one" or "the first one is coupled to the second one with a third one provided therebetween".

A display device and a driving method thereof according to exemplary embodiments of the present invention will be described in detail with reference to the drawings, and an organic light emitting diode display device using an organic light emitting diode as a light emitting element will be exemplified and described in the exemplary embodiments.

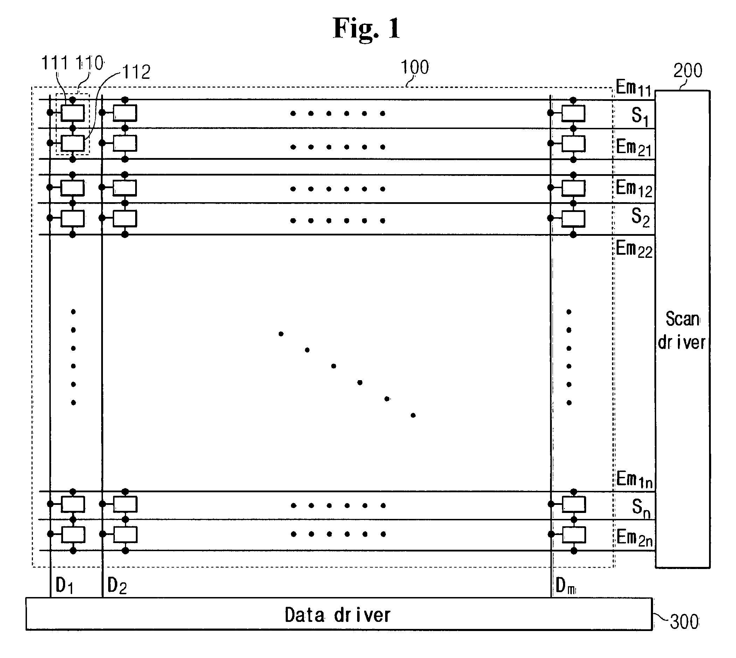

FIG. 1 shows a plan view of an organic light emitting diode display device according to a first exemplary embodiment of the present invention.

As shown in FIG. 1, the organic light emitting diode display device includes a display area 100 seen as a screen to a user, a scan driver 200, and a data driver 300.

The display area 100 includes a plurality of data lines $D_1$ to $D_m$, a plurality of select scan lines $S_1$ to $S_n$, a plurality of emit scan lines $Em_{11}$ to $Em_{1n}$ and $Em_{21}$ to $Em_{2n}$, and a plurality of unit pixels 110. Each unit pixel 110 includes two sub-pixels 111 and 112 which are arranged in a column direction. The data lines $D_1$ to $D_m$ are extended in a column direction and transmit data signals representing images to the corresponding unit pixels. The select scan lines $S_1$ to $S_n$ are extended in a row direction and transmit select signals for selecting corresponding lines to the select scan lines $S_1$ to $S_n$ in order to apply data signals to the unit pixels of the corresponding lines. The emit scan lines $Em_{11}$ to $Em_{1n}$ and $Em_{21}$ to $Em_{2n}$ are extended in a row direction and transmit emission control signals for controlling light emission of the respective sub-pixels 111 or 112 to the corresponding unit pixels 110. The unit pixel 110 is defined in an area where the select scan lines $S_1$ to $S_n$ and the data lines $D_1$ to $D_m$ are crossed. The scan lines $S_1$ to $S_n$ are coupled to the sub-pixels 111 and 112 in the respective unit pixels 110.

One field is divided into two subfields, and the scan driver 200 sequentially transmits select signals to the select scan lines $S_1$ to $S_n$ in the respective subfields. The scan driver 200 sequentially transmits emission control signals for controlling light emission of the sub-pixels 111 to the emit scan lines $Em_{11}$ to $Em_{1n}$ in one subfield, and sequentially transmits emission control signals for controlling light emission of the sub-pixels 112 to the emit scan lines $Em_{21}$ to $Em_{2n}$ in the other subfield. The data driver 300 applies data signals corresponding to the pixels of lines to which select signals are applied to the data lines $D_1$ to $D_m$ each time the select signals are sequentially applied. In addition, the data driver 300 applies data signals corresponding to the sub-pixels 111 in the one subfield, and applies data signals corresponding to the sub-pixels 112 in the other subfield.

The scan driver 200 and the data driver 300 are coupled to a substrate in which the display area 100 is formed. Alternatively, the scan driver 200 and/or the data driver 300 may be installed directly on the substrate, and they may be substituted with a driving circuit which is formed on the same layer on the substrate as the layer on which scan lines, data lines, and transistors are formed. Alternatively, the scan driver 200 and/or the data driver 300 may be installed in a chip format on a tape carrier package (TCP), a flexible printed circuit (FPC), or a tape automatic bonding unit (TAB) coupled to the substrate.

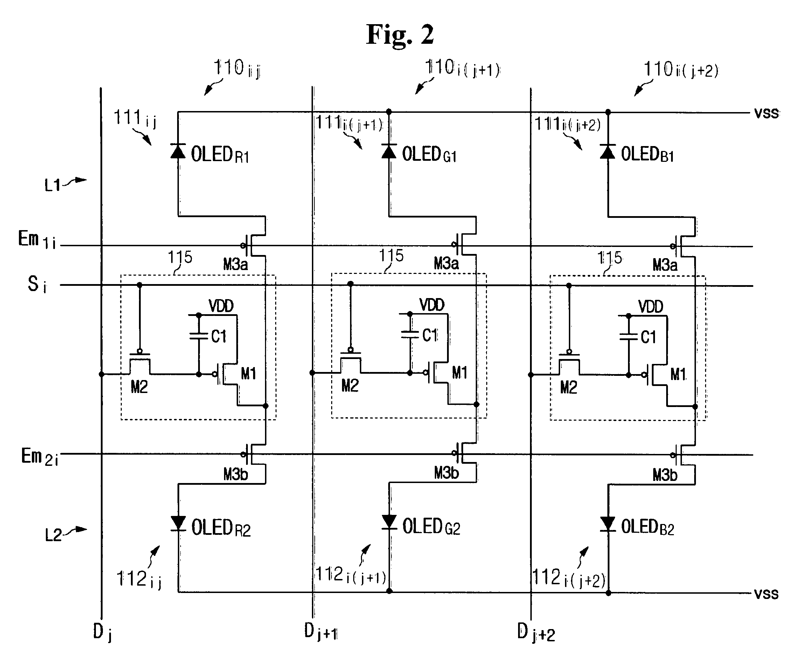

FIG. 2 shows a simplified circuit diagram of the unit pixels of the organic light emitting diode display device shown in FIG. 1. The three unit pixels $110_{ij}$, $110_{i(j+1)}$, and $110_{i(j+2)}$ coupled to the scan line $S_i$ of the $i^{th}$ row (where 'i' is a positive integer less than or equal to 'n') and the data lines $D_j$ to $D_{j+2}$ of the $j^{th}$ to $(j+2)^{th}$ columns (where 'j' is a positive integer less than or equal to 'm-2') will be exemplified in FIG. 2. It is assumed that the sub-pixels are arranged in an order of R, G, and B along the row direction, and the same color sub-pixels are arranged along the column direction in FIG. 2.

As shown in FIG. 2, the two sub-pixels 111 and 112 of the one unit pixel 100 are coupled to one of the select scan lines $S_1$ to $S_n$ in common and have a pixel driver 115 in common, and the pixel driver 115 includes a driving transistor M1, a switching transistor M2, and a capacitor C1.

In more detail, the unit pixel $110_{ij}$ coupled to the $i^{th}$ select scan line $S_i$ and the $j^{th}$ data line $D_j$ includes the pixel driver 115, a switching unit, and two organic light emitting diodes $OLED_{R1}$ and $OLED_{R2}$ that emit red light. The switching unit includes two emission control transistors M3a and M3b to selectively transmit a driving current from the pixel driver 115 to the two organic light emitting diodes $OLED_{R1}$ and $OLED_{R2}$. In addition, the sub-pixels $111_{ij}$ and $112_{ij}$ respectively include the two organic light emitting diodes $OLED_{R1}$ and $OLED_{R2}$ in the unit pixel $110i_j$.

The unit pixel $110_{i(j+1)}$ coupled to the $i^{th}$ select scan line $S_i$ and the $(j+1)^{th}$ data line $D_{j+i}$, and the unit pixel $110_{i(j+2)}$ coupled to the $i^{th}$ select scan line $S_i$ and the $(j+2)^{th}$ data line $D_{j+2}$ have the same structures as the unit pixel $110_{ij}$. In addition, the sub-pixels $111_{i(j+i)}$ and $112_{i(j+1)}$ respectively include two organic light emitting diodes $OLED_{G1}$ and $OLED_{G2}$ that emit green light in the unit pixel $110_{i(j+1)}$, and the sub-pixels $111_{i(j+2)}$ and $112_{i(j+2)}$ respectively include two organic light emitting diodes $OLED_{B1}$ and $OLED_{B2}$ that emit blue light in the unit pixel $110_{i(j+2)}$.

In the unit pixel $110_{ij}$, the driving transistor M1 has a source coupled to a power line for supplying a power supply voltage VDD, and a gate coupled to a drain of the switching transistor M2. The capacitor C1 is coupled between the source and the gate of the driving transistor M1. The switching transistor M2 having a gate coupled to the select scan line $S_i$ and a source coupled to the data line $D_j$, transmits (or applies) the data signal converted to analog voltage (hereinafter, "data voltage") provided by the data line $D_j$ in response to the select signal provided by the select scan line $S_i$. The driving transistor M1 has a drain coupled to sources of the emission control transistors M3a and M3b, and gates of the emission control transistors M3a and M3b are coupled to the emit scan lines $Em_{1i}$ and $Em_{2i}$, respectively. Drains of the emission control transistors M3a and M3b are coupled, respectively, to anodes of the organic light emitting diodes $OLED_{R1}$ and $OLED_{R2}$, and a power supply voltage VSS is applied to cathodes of the organic light emitting diodes $OLED_{R1}$ and $OLED_{R2}$. The power supply voltage VSS in the first exemplary embodiment is lower than the voltage VDD, and can be a negative voltage or a ground voltage. As shown in FIG. 2, the unit pixels $110_{i(j+i)}$ and $110_{i(j+2)}$ have the same connecting structure as the unit pixel $110_{ij}$.

In the unit pixel $110_{ij}$, the one emit scan line $Em_{1i}$ of the emit scan lines $Em_{1i}$ and $Em_{2i}$ is coupled to the gates of the transistors M3a respectively coupled to the organic light emitting diodes $OLED_{R1}$, $OLED_{G1}$, and $OLED_{B1}$, and the other emit scan line $Em_{2i}$ is coupled to the gates of the transistors M3b respectively coupled to the organic light emitting diodes $OLED_{R2}$, $OLED_{G2}$ and $OLED_{B2}$.

A low-level emission control signal is applied to the emit scan line $Em_{1i}$ in one subfield of two subfields forming a field, and therefore, the transistor M3a is turned on. Then, a current $I_{OLED}$ as expressed in Equation 1 flows from the transistor M1 to the organic light emitting diode so that the organic light emitting diodes $OLED_{R1}$, $OLED_{G1}$ and $OLED_{B1}$ emit light corresponding to the magnitude of the current $I_{OLED}$. A low-level emission control signal is applied to the emit scan line $Em_{2i}$ in the other subfield, and therefore, the transistor M3b is turned on. Then, a current $I_{OLED}$ flows from the transistor M1 to the organic light emitting diode so that the organic light emitting diodes $OLED_{R2}$, $OLED_{G2}$ and $OLED_{B2}$ emit light.

## Equation 1

$$I_{OLED} = \frac{\beta}{2}(|V_{SG}| - |V_{TH}|)^2$$

where β is a constant determined by a channel width and a channel length of the transistor M1, $V_{SG}$ is a voltage between the source and the gate of the transistor M1, and $V_{TH}$ is a threshold voltage of the transistor M1.

Referring to FIG. 2, an upper line L1 is formed by the organic light emitting diodes $OLED_{R1}$, $OLED_{G1}$ and $OLED_{B1}$, and a lower line L2 is formed by the organic light emitting diodes $OLED_{R2}$, $OLED_{G2}$ and $OLED_{B2}$. The organic light emitting diodes of the upper line L1 start emitting light in one subfield of the fields, and the organic light emitting diodes of the lower line L2 start emitting light in the other subfield of the fields.

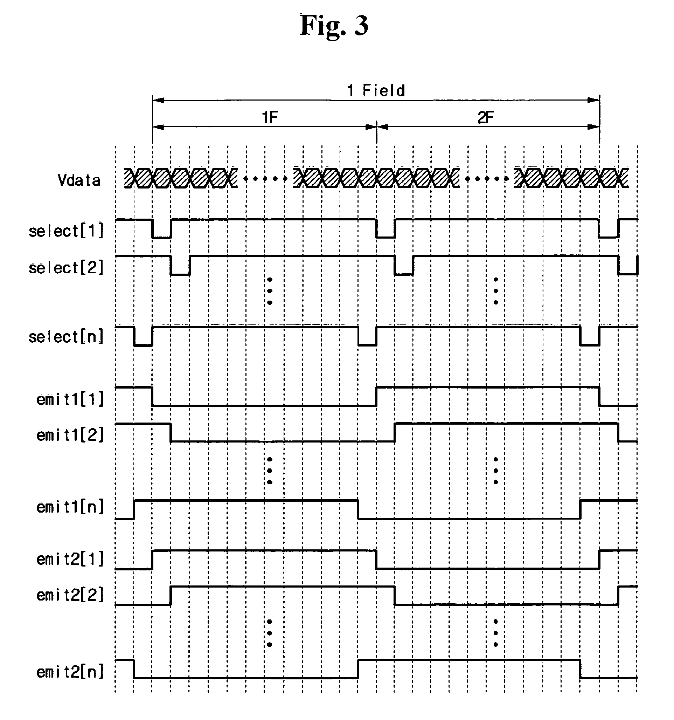

A driving method of the organic light emitting diode display device according to the first exemplary embodiment of the present invention will be described in detail with reference to FIG. 3. In FIG. 3, the select signal applied to the select scan line $S_i$ is depicted as 'select[i]', and the emission control signals applied to the emit scan lines $Em_{1i}$ and $Em_{2i}$ are depicted as 'emit1[i]' and 'emit2[i]', respectively.

As shown in FIG. 3, one field includes two subfields 1 F and 2F, and low-level select signals are sequentially applied to the select scan lines $S_1$ to $S_n$ in each subfield 1 F or 2F. The two organic light emitting diodes of the unit pixel that share the select scan line emit light during periods corresponding to subfields 1 F and 2F, respectively. In FIG. 3, widths of low-level signals (e.g., pulses) of the emission control signals emit1 [i] and emit2 [i] are the same as periods corresponding to the subfields 1 F and 2F, respectively.

In the first subfield 1F, when a low-level select signal select[1] is applied to the select scan line $S_1$ on the first row, data voltages corresponding to the organic light emitting diodes $OLED_{R1}$, $OLED_{G1}$ and $OLED_{B1}$ of the unit pixels on the first row are applied to the corresponding data lines $D_1$-$D_m$. A low-level emission control signal emit1[1] is applied to the emit scan line $Em_{11}$ on the first row, and the emission control transistors M3a of the unit pixels on the first row are turned on. Then, currents corresponding to the data voltages are transmitted to the corresponding organic light emitting diodes $OLED_{R1}$, $OLED_{G1}$ and $OLED_{B1}$ from the driving transistors M1 to thus emit light in the upper line L1 on the first row. The light is emitted during the period in which the emission control signal emit1[1] is low-level.

Next, when a low-level select signal select[2] is applied to the select scan line $S_2$ on the second row, data voltages corresponding to the organic light emitting diodes $OLED_{R1}$, $OLED_{G1}$ and $OLED_{B1}$ of the unit pixels on the second row are applied to the corresponding data lines $D_1$-$D_m$. A low-level emission control signal emit1[2] is applied to the emit scan line $Em_{12}$ on the second row, and the emission control transistors M3a of the unit pixels on the second row are turned on. Then, the organic light emitting diodes $OLED_{R1}$, $OLED_{G1}$ and $OLED_{B1}$ on the upper line L1 of the second row emit light in response to the low-level emission control signal emit1[2]. The light is emitted during the period in which the emission control signal emit1[2] is low-level.

In a like manner, low-level select signals select [1] to select[n] are sequentially applied to the select scan

lines $S_1$ to $S_n$ on the first to $n^{th}$ rows in the first subfield 1 F. When the low-level select signal select[i] is applied to the select scan line $S_i$ on the $i^{th}$ row, the data voltages corresponding to the organic light emitting diodes $OLED_{R1}$, $OLED_{G1}$, and $OLED_{B1}$ of the unit pixels on the $i^{th}$ row are applied to the corresponding data line $D_1$ to $D_m$, and a low-level emission control signal emit1[i] is applied to the emit scan line $Em_{1i}$ of the $i^{th}$ row. Then, the organic light emitting diodes $OLED_{R1}$, $OLED_{G1}$ and $OLED_{B1}$, which are formed on the upper line L1 of the $i^{th}$ row, emit light during a period corresponding to the width of the low-level emission control signal emit1[i].

In the second subfield 2F, a low-level select signal select[1] is applied to the select scan line $S_1$ on the first row, and data voltages corresponding to the organic light emitting diodes $OLED_{R2}$, $OLED_{G2}$ and $OLED_{B2}$ of the unit pixels on the first row are applied to the corresponding data lines $D_1$-$D_m$. A low-level emission control signal emit2[1] is applied to the emit scan line $Em_{21}$ on the first row, and the emission control transistors M3b of the unit pixels on the first row are turned on. Then, the organic light emitting diodes $OLED_{R2}$, $OLED_{G2}$ and $OLED_{B2}$ on the lower line L2 of the first row emit light during the period in which the emission control signal emit2[1] is low-level.

Next, a low-level select signal select[2] is applied to the select scan line $S_2$ on the second row, and data voltages corresponding to the organic light emitting diodes $OLED_{R2}$, $OLED_{G2}$ and $OLED_{B2}$ of the unit pixels on the second row are applied to the corresponding data lines $D_1$-$D_m$. A low-level emission control signal emit2[2] is applied to the emit scan line $Em_{22}$ on the second row, and the emission control transistors M3b of the unit pixels on the second row are turned on. Then, the organic light emitting diodes $OLED_{R2}$, $OLED_{G2}$ and $OLED_{B2}$ on the lower line L2 of the second row emit light during the period in which the emission control signal emit2[2] is low-level.

In a like manner, low-level select signals select [1] to select[n] are sequentially applied to the select scan lines $S_1$ to $S_n$ on the first to $n^{th}$ rows in the second subfield 2F. When the low-level select signal select[i] is applied to the select scan line $S_i$ on the $i^{th}$ row, the data voltages corresponding to the organic light emitting diodes $OLED_{R2}$, $OLED_{G2}$ and $OLED_{B2}$ of the unit pixels on the $i^{th}$ row are applied to the corresponding data line $D_1$ to $D_m$, and a low-level emission control signal emit2[i] is applied to the emit scan line $Em_{2i}$ of the $i^{th}$ row. Then, the organic light emitting diodes $OLED_{R2}$, $OLED_{G2}$ and $OLED_{B2}$, which are formed on the lower line L2 of the $i^{th}$ row, emit light in during a period corresponding to the width of the low-level emission control signal emit2[i].

As described above, one field is divided into the two subfields, and the subfields are sequentially driven in the organic light emitting diode display device driving method according to the first exemplary embodiment. The organic light emitting diodes formed on the upper line L1 of the each row start emitting light in one subfield, and the organic light emitting diodes formed on the lower line L2 of the each row start emitting light in the other subfield. As a result, the organic light emitting diodes of all sub-pixels formed on 2n lines of n rows can emit light in the one field. In addition, the number of select scan lines and the number of pixel drivers (e.g., the transistors and the capacitors) can be reduced since the two sub-pixels share the select scan line and the pixel driver. As a result, the number of integrated circuits for driving the select scan lines can be reduced, and the elements can be easily arranged in the unit pixel.

Further, the scan driver and the data driver of the interlace scan method may be applicable to those according to the first exemplary embodiment of the present invention because the lower lines L2 are scanned after the upper lines L1 are scanned in the first exemplary embodiment. In addition, the single scan method is applicable to the organic light emitting diode display device in FIG. 3, but the dual scan method may also be applicable to the organic light emitting diode display device according to the first exemplary embodiment by using two scan drivers. Further, another scan method, in which the select scan signals are selectively applied to the plurality of select scan lines, may also be applicable to the organic light emitting diode display device according to the first exemplary embodiment.

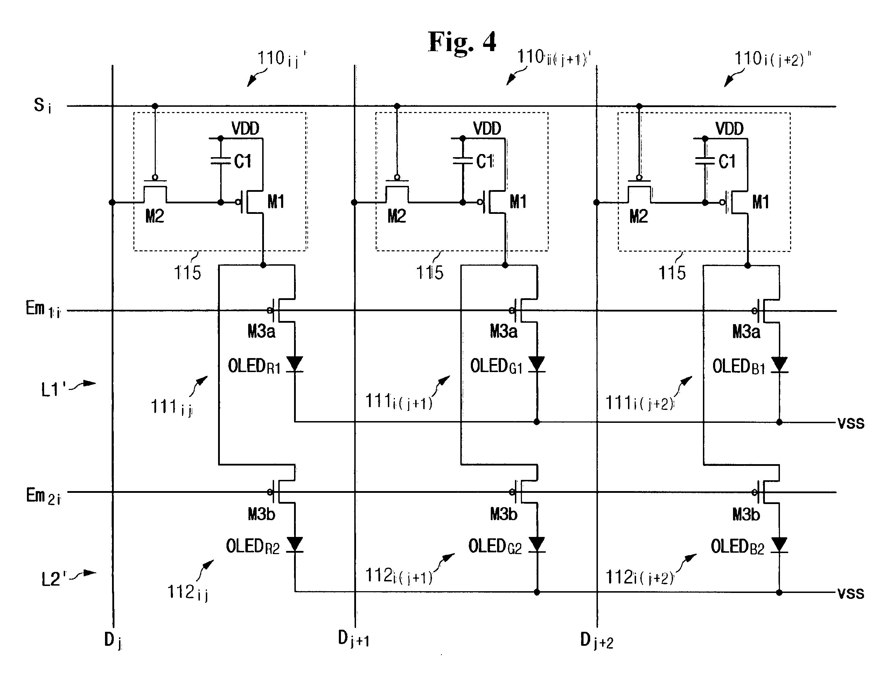

Referring back to FIGs. 1 and 2, in the first exemplary embodiment, one sub-pixel $111_{ij}$ (including the organic light emitting diode $OLED_{R1}$) of the unit pixel $110_{ij}$ is arranged on the upper side of the select scan line $S_i$, and the other sub-pixel $112_{ij}$ (including the organic light emitting diode $OLED_{R2}$) of the unit pixel $110_{ij}$ is arranged on the lower side of the select scan line $S_i$. Alternatively, as shown in FIG. 4, the two sub-pixels $111_{ij}$ and $112_{ij}$ may be arranged on the lower side (or the upper side) of the select scan line $S_i$.

FIG. 4 shows a simplified circuit diagram of unit pixels $110_{ij}$', $110_{i(j+1)}$' and $110_{i(j+2)}$' of an organic light emitting diode display device in an example useful for understanding the invention.

As shown in FIG. 4, the organic light emitting diodes $OLED_{R1}$, $OLED_{G1}$ and $OLED_{B1}$ are arranged below the pixel driver 115 to form the upper line L1', and the organic light emitting diodes $OLED_{R2}$, $OLED_{G2}$ and $OLED_{B2}$ are arranged below the upper line L1' to form the lower line L2'.

However, when the organic light emitting diodes are arranged as shown in FIG. 4, length of a wire for transmitting current from the pixel driver 115 to the organic light emitting diode $OLED_{R2}$, $OLED_{G2}$ or $OLED_{B2}$ is longer than length of a wire for transmitting current from the pixel driver 115 to the organic light emitting diode $OLED_{R1}$, $OLED_{G1}$ or $OLED_{B1}$. Then, the brightness of the upper line L1' may be different from the brightness of the lower line L2' by parasitic components present in the wire.

The transistors M1, M2, M3a, and M3b are depicted as PMOS transistors in FIGs. 2 and 4, but another conductive type of transistors may be applicable to the transistors M1, M2, M3a, and M3b.

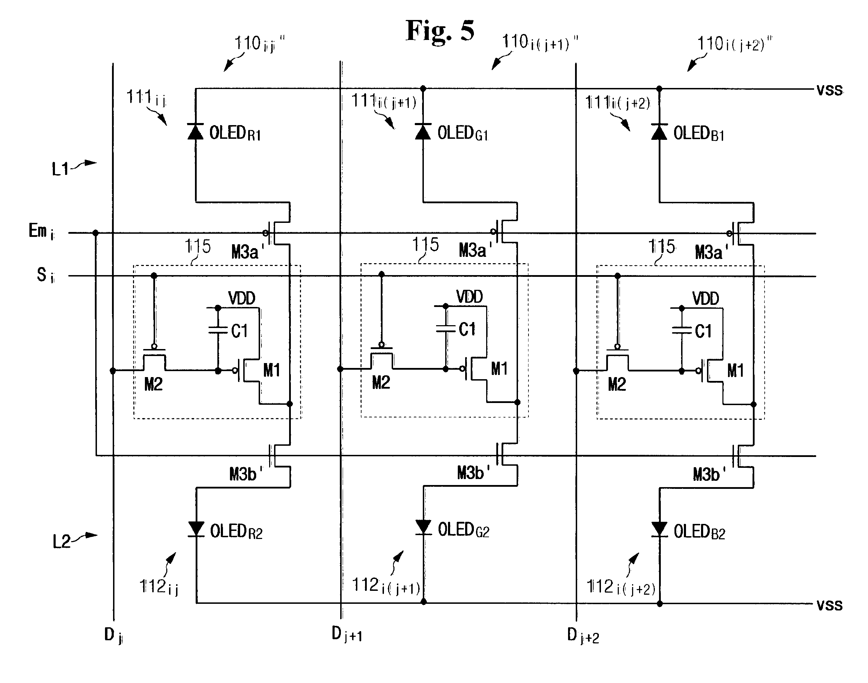

In addition, while the two emission control transistors M3a and M3b are respectively controlled by the two emit scan lines $Em_{1i}$ and $Em_{2i}$ in the first exemplary embodiment, emission control transistors in other embodiments may be controlled by one emit scan line as shown in FIG. 5.

FIG. 5 shows a simplified circuit diagram of unit pixels $110_{ij}$", $110_{i(j+i)}$" and $110_{i(j+2)}$" of an organic light emitting diode display device in an example useful for understanding the invention.

As shown in FIG. 5, the unit pixel $110_{ij}$" has the same structure as that according to the first exemplary embodiment, except for emission control transistors M3a' and M3b' and an emit scan line $Em_i$.

In more detail, an emission control transistor M3a' has the opposite conductive type to an emission control transistor M3b', and the emit scan line $Em_i$ on $i^{th}$ row is coupled to gates of the two emission control transistors M3a' and M3b'. In FIG. 5, the emission control transistors M3a' respectively coupled to the organic light emitting diodes $OLED_{R1}$, $OLED_{G1}$ and $OLED_{B1}$ of the upper line L1 are depicted as PMOS transistors, and the emission control transistors M3b' coupled to the organic light emitting diodes $OLED_{R2}$, $OLED_{G2}$ and $OLED_{B2}$ of the lower line L2 are depicted as NMOS transistors. In addition, an emission control signal applied to the emit scan line $Em_i$ has the same signal timing as the emission control signal emit1[i] shown in FIG. 3.

Then, emission timings of the organic light emitting diodes $OLED_{R1}$, $OLED_{G1}$ and $OLED_{B1}$ coupled to the transistors M3a', which have the same conductive type as the transistors M3a shown in FIG. 2, are the same as those of the first exemplary embodiment. Referring to FIG. 3, since the emission control signal emit2[i] has an inverted waveform of the emission control signal emit1[i], and the transistor M3b' has the opposite conductive type to the transistor M3b shown in FIG. 2, emission timings of the organic light emitting diodes $OLED_{R2}$, $OLED_{G2}$ and $OLED_{B2}$ coupled to the transistors M3b' are the same as those of the first exemplary embodiment.

As a result, the number of the emit scan lines $Em_i$ according to present example can be reduced as compared with those according to the first exemplary embodiment.

The two sub-pixels share the select scan line in the first third exemplary embodiment, but three or more sub-pixels may share the select scan line in other embodiments. Assuming that three sub-pixels (respectively including three organic light emitting diodes) arranged in a column direction share a select scan line, three emission control transistors are coupled to the three organic light emitting diodes, respectively. The three emit scan lines may be respectively coupled to gates of the three emission control transistors, and may respectively transmit (or apply) emission control signals for controlling the three emission control transistors. In addition, one field may be divided into three subfields, and the three emission control transistors may be respectively turned on in the three subfields. Then, one row may be divided into the three lines, and the three lines may emit light in the three subfields, respectively.

The sub-pixels having the same color are coupled to the pixel driver 115 in the first exemplary embodiment, but the sub-pixels having different colors may be coupled to the pixel driver 115. For example, R organic light emitting diode may be coupled to the upper side of the pixel driver 115 in the unit pixel $110_{ij}$ shown in FIG. 2, and G organic light emitting diode may be coupled to the lower side of the pixel driver 115.

However, since the R, G, and B organic light emitting diodes generally require different current ranges for representing gray levels, the driving voltages which are respectively transmitted from the driving transistors to the R, G, and B organic light emitting diodes are set to the different ranges. In order to set the different ranges, the ranges of the data voltages which are transmitted through the data lines to the driving transistors may be set to be different in R, G, and B sub-pixels, or the sizes of the driving transistors may be set to be different in the R, G, and B sub-pixels. However, if the colors represented in the sub-pixels sharing the pixel driver are different, the data voltages corresponding to the sub-pixels having the different colors are respectively transmitted to the data line in the respective subfields. Then, the data voltage of the data driver is difficult to be optimized because the data voltage range of the data driver is not optimized to the sub-pixels having the same color and is optimized to or made suitable for the sub-pixels having different colors.

On the other hand, when the sub-pixels sharing the pixel driver have the same color as shown in FIGs. 2, 4, and 5, each output of the data driver can be optimized to the data voltage corresponding to each color. Accordingly, the data voltage transmitted to the one data line can be set to the voltage range corresponding to the one color, and the desired brightness can be represented in the respective sub-pixels. As a result, a white balance can be realized in the display area.

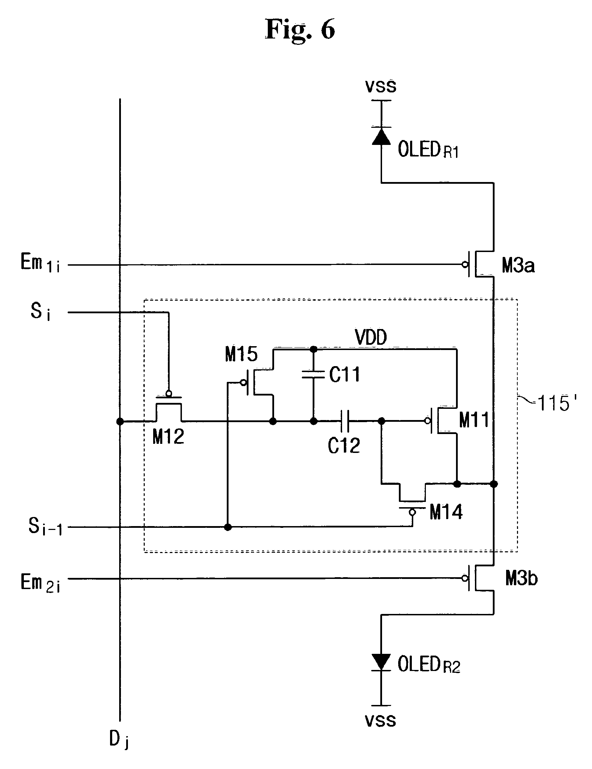

In addition, the pixel driver using the switching and driving transistors and the capacitor is described in the first exemplary embodiment, but the plurality of sub-pixels may share a pixel driver which uses at least one transistor and/or at least one capacitor in addition to the switching and driving transistors to compensate variation of the threshold voltage of the driving transistor or the voltage drop. That is, since the driving current outputted from the pixel driver generally depends on the threshold voltage of the driving transistor in the unit pixel shown in FIG. 2, the driving currents may be different if the threshold voltages of the driving transistors are different. Then, the brightness between the unit pixels may be different. A unit pixel which can compensate for a variation of the threshold voltage of the driving transistor will be described with reference to FIG. 6.

FIG. 6 shows a simplified circuit diagram of a unit pixel of an organic light emitting diode display device according to a second exemplary embodiment of the present invention. The unit pixel coupled to the scan line $S_i$ of the $i^{th}$ row and the data line $D_j$ will be exemplified in FIG. 6. When referring to the select scan lines, a scan line for transmitting a current select signal will be referred to as a "current select scan line" and a scan line which has transmitted a select signal before the current select signal is transmitted will be referred to as a "previous select scan line."

As shown in FIG. 6, a pixel driver 115' of the unit pixel according to the second exemplary embodiment further includes a threshold voltage compensator for compensating a threshold voltage of a driving transistor. Hence, the unit pixel of FIG. 6 is different from the unit pixel according to the first exemplary embodiment. The threshold voltage compensator includes two transistors M14 and M15, and a capacitor C12.

In more detail, transistors M11, M12, M13a, and M13b correspond to the transistors M1, M2, M3a, and M3b shown in FIG. 2, respectively, and capacitors C11 and C12 correspond to the capacitor C1 shown in FIG. 2. A first electrode of the capacitor C11 is coupled to a power supply voltage VDD, and a second electrode of the capacitor C11 is coupled to a first electrode of the capacitor C12. A second electrode of the capacitor C12 is coupled to a gate electrode of the driving transistor M11, and the switching transistor M12 is coupled to the first electrode of the capacitor C12. The transistor M14 is coupled between gate and drain electrodes of the transistor M11, and diode-connects the transistor M11 in response to the select signal of the previous select scan line $S_{i-1}$. The transistor M15 is coupled between the power supply voltage VDD and the first electrode of the capacitor C12, and couples the first electrode of the capacitor C12 to the power supply voltage VDD in response to the select signal of the previous select scan line $S_{i-1}$.

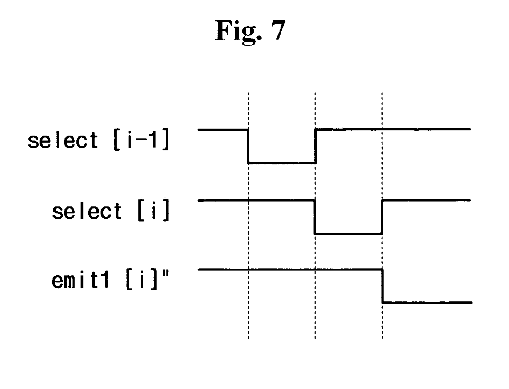

An operation of the unit pixel $115_{ij}'$ shown in FIG. 6 will be described with reference to FIG. 7. In reference to FIG. 7, a first subfield in which the organic light emitting diodes formed on the upper line L1 are emitted by turn-on of the transistors M13a will be described only. Therefore, the emission control signal, which is applied to the emit scan line $Em_{2i}$ and is high-level in the first subfield, is not shown in FIG. 7.

Referring to FIG. 7, the transistors M14 and M15 are turned on during a period in which the select signal select[i-1] of the previous select scan line $S_{i-1}$ is low-level, and the emission control signal emit1[i]" of the emit scan line $Em_{1i}$ is high-level. Then, the transistor M14 is diode-connected while the transistor M13a and M13b are turned off, and a voltage between the gate and source electrodes of the transistor M11 becomes the threshold voltage Vth of the transistor M11. In addition, since the capacitor C12 is coupled between the gate and source electrodes of the transistor M11, a voltage at the gate electrode of the transistor M11, i.e., the second electrode of the capacitor C12, becomes "VDD+Vth" voltage.

Next, the transistor M12 is turned on and the transistors M14 and M15 are turned off during a period in which the select signal select[i] of the current select scan line $S_i$ is low-level, and the emit control signal emit1 [i]" is high-level. Then, since the data voltage Vdata is applied to the first electrode of the capacitor C12 through the switching transistor M12, a voltage at the second electrode of the capacitor C12 is changed by the variation "Vdata-VDD" of the voltage at the first electrode of the capacitor C12. That is, the voltage at the second electrode of the capacitor C12 becomes "Vdata+Vth" voltage, and therefore, the voltage between the gate and source electrodes of the transistor M11 becomes "Vdata+Vth-VDD" voltage. In addition, the "Vdata+Vth-VDD" voltage is stored in the capacitors C11 and C12.

Next, when the emission control signal becomes low-level, a current $I_{OLED}$ expressed in Equation 2 flows from the transistor M11 to the organic light emitting diode $OLED_{R1}$, and then, the organic light emitting diode $OLED_{R1}$ emits light.

$$\text{Equation 2}$$
$$I_{OLED} = \frac{\beta}{2}(VDD - Vdata)^2$$

In addition, a unit pixel which can compensate the threshold voltage of the driving transistor by adding at least one transistor and/or at least one capacitor to the unit pixel of FIG. 2 may be used instead of the unit pixel shown in FIG. 6.

Further, the low-level period of the emission control signal may be set differently from the period shown in FIG. 3. For example, when the brightness is high, the low-level period of the emission control signal may be set to be shorter than a period corresponding to the subfield. That is, the rising edge of the emission control signal may be set to be later than the rising edge of the select signal, and/or the falling edge of the emission control signal may be set to be faster (or earlier) than the rising edge of the select signal in the next subfield.

The organic light emitting diode display device using the voltage programming method is described in the first to second exemplary embodiments, but the above-described exemplary embodiments can be applicable to the organic light emitting diode display device using the current programming method.

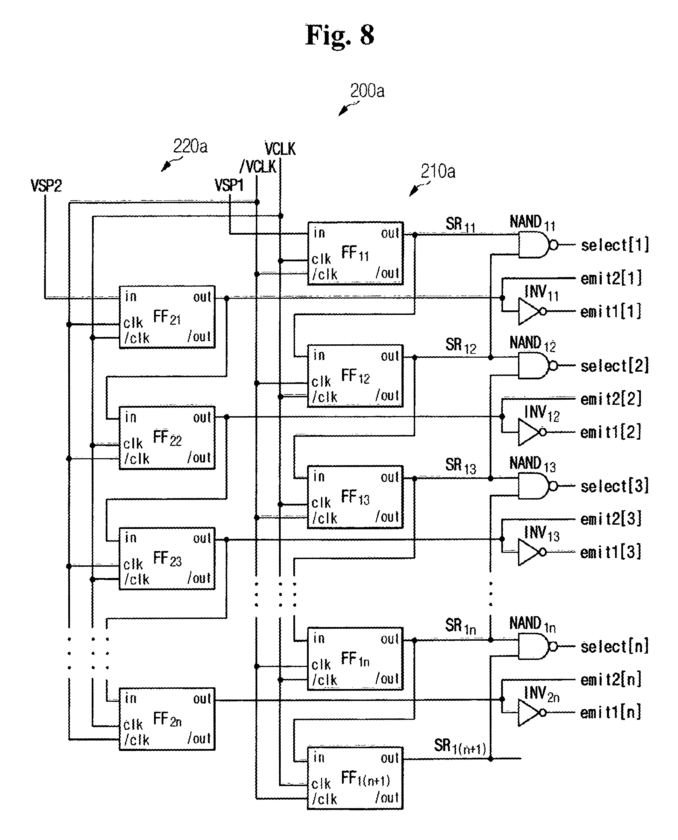

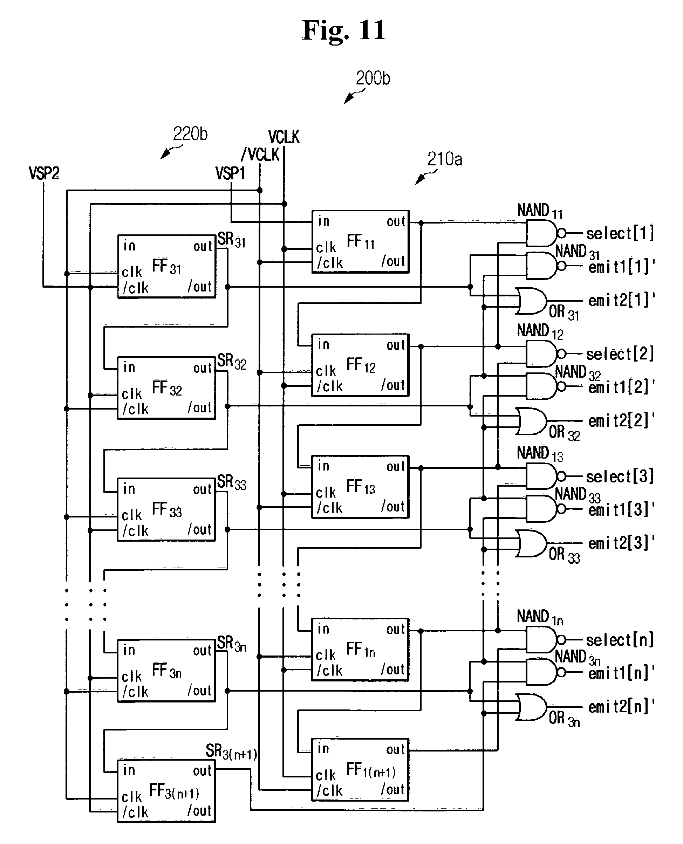

Next, scan drivers (e.g., the scan driver 200 of FIG. 1) of organic light emitting diode display devices according to an exemplary embodiment of the present invention will be described with reference to FIGs. 8 to 10, further examples useful for understanding the invention are shown in FIGs. 11 to 25.

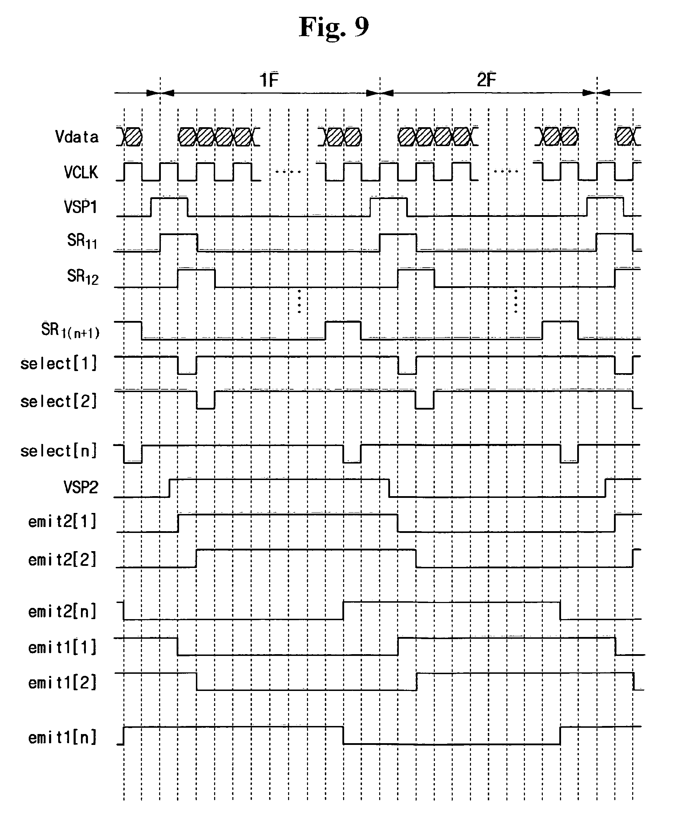

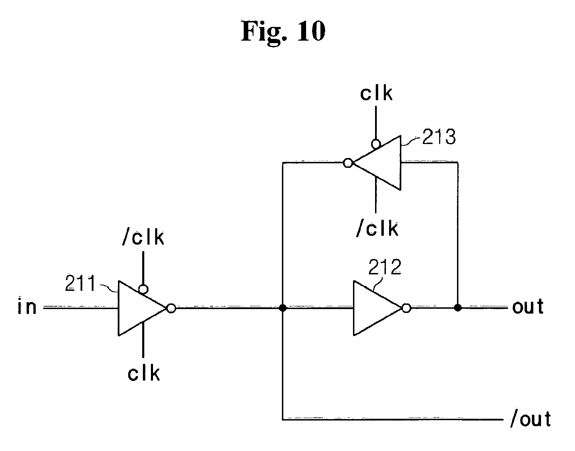

FIG. 8 shows a scan driver 200a in an organic light emitting diode display device according to another embodiment, FIG. 9 shows a signal timing diagram in the scan driver 200a of FIG. 8, and FIG. 10 shows a flip-flop used in the select scan driver 200a of FIG. 8. An inverted signal of a clock VCLK is depicted as /VCLK in FIG. 8, and is not shown in FIG. 9.

As shown in FIG. 8, the scan driver 200a includes two shift registers 210a and 220a. The shift register 210a includes (n+1) flip-flops $FF_{11}$ to $FF_{1(n+1)}$ and n NAND gates $NAND_{11}$ to $NAND_{1n}$, and the shift register 220a includes n flip-flops $FF_{21}$ to $FF_{2n}$ and n inverters $INV_{21}$ to $INV_{2n}$.

In the shift register 210a, a start signal VSP1 is inputted to the first flip-flop $FF_{11}$, and an output signal $SR_{1i}$ of the $i^{th}$ flip-flop $FF_{1i}$ is inputted to the $(i+1)^{th}$ flip-flop $FF_{1(i+1)}$. The $i^{th}$ NAND gate $NAND_{1i}$ performs a NAND operation to the output signals $SR_{1i}$ and $SR_{1(i+1)}$ of the two adjacent flip-flops $FF_{1i}$ and $FF_{1(i+1)}$ and outputs a select signal select[i].

In the shift register 220a, a start signal VSP2 is inputted to the first flip-flop $FF_{21}$, and an output signal of the $i^{th}$ flip-flop $FF_{2i}$ is inputted to the $(i+1)^{th}$ flip-flop $FF_{2(i+l)}$. In addition, the output signal of the $i^{th}$ flip-flop $FF_{2i}$ is the emission control signal emit2[i], and the inverter $INV_{2i}$ inverts the output signal of the $i^{th}$ flip-flop $FF_{2i}$ to output the emission control signal emit1 [i].

The flip-flops $FF_{1i}$ and $FF_{2i}$ output input signals (in) in response to a high-level clock (clk), and latch and output the input signals (in) of the high-level period of the clock (clk) in response to a low-level clock (clk). That is, the flip-flops $FF_{1i}$ and $FF_{2i}$ output the input signals (in) of the high-level period of the inner clock (clk) during one clock VCLK cycle.

Referring to FIG. 8, the clock /VCLK or VCLK inverted to the clock VCLK or /VCLK, which are used in the flip-flop $FF_{1i}$, are used in the flip-flops $FF_{1(i+1)}$ adjacent to the flip-flop $FF_{1i}$. In more detail, the flip-flops $FF_{1i}$ that are located at odd-numbered positions in a longitudinal direction use the clocks VCLK as inner clocks (clk). The flip-flops $FF_{1i}$ that are located at even-numbered positions in the longitudinal direction use the inverted clocks /VCLK as inner clocks (clk). Since the output signal $SR_{1i}$ of the flip-flop $FF_{1i}$ is inputted to the flip-flop $FF_{1(i+1)}$, the output signal $SR_{1(i+1)}$ of the flip-flop $FF_{1(i+1)}$ is shifted from the output signal $SR_{1i}$ of the flip-flop $FF_{1i}$ by a half clock VCLK cycle.

As shown in FIG. 9, the start signal VSP1 has a high-level signal (e.g., high-level pulse) in the high-level period of the one clock VCLK cycle in each of the subfields 1 F and 2F, and the flip-flop $FF_{11}$ outputs the high-level signal during one clock VCLK cycle in each of the subfields 1 F and 2F. As a result, the flip-flops $FF_{11}$ to $FF_{1(n+1)}$ may sequentially output each output signal $SR_{1i}$ by shifting the high-level signal by the half clock VCLK cycle.

The NAND gate $NAND_{1i}$ performs a NAND operation of the output signals $SR_{1i}$ and $SR_{1(i+1)}$ of the flip-flops $FF_{1i}$ and $FF_{1(i+1)}$, and outputs a low-level signal (e.g., low-level pulse) when both output signals $SR_{1i}$ and $SR_{1(i+1)}$ are high-level. Here, since the output signal $SR_{1(i+1)}$ of the flip-flop $FF_{1(i+1)}$ is shifted from the output signal $SR_{1i}$ of the flip-flop $FF_{1i}$ by the half clock VCLK cycle, the output signal select[i] of the NAND gate $NAND_{1i}$ has a low-level signal during a period in which the both output signals $SR_{1i}$ and $SR_{1(i+1)}$ have the high-level signal in common in each of the subfields 1 F and 2F. In addition, the output signal select[i+1] of the NAND gate $NAN0_{1(i+1)}$ is shifted from the output signal select[i] of the NAND gate $NAND_{1i}$ by half the clock VCLK cycle. Therefore, the shift register 210a may sequentially output each select signal select[i] by shifting the low-level signal by the half clock VCLK cycle.

The flip-flop $FF_{2i}$ of the shift register 220a has the same structure as the flip-flop $FF_{1i}$ of the shift register 210a except for the clocks VCLK and /VCLK. That is, the flip-flops $FF_{2i}$ that are located at odd-numbered positions in the longitudinal direction use the inverted clocks /VCLK as inner clocks (clk), and the flip-flops $FF_{2i}$ that are located at the even-numbered positions use the clocks VCLK as inner clocks (clk). Therefore, the emission control signal emit1[i+1] which is the output signal of the flip-flop $FF_{2(i+1)}$ is shifted from the emission control signal emit1[i], which is the output signal of the flip-flop $FF_{2i}$, by the half clock VCLK cycle.

In addition, the start signal VSP2 is high-level in the low-level period of all clock VCLK cycles in the subfield 1 F and is low-level in the low-level period of all clock VCLK cycles in the subfield 2F. As a result, the emission control signal emit2[1] becomes high-level when the select signal select[1] becomes low-level in the first subfield 1 F, and becomes low-level when the select signal select[1] becomes low-level in the second subfield 2F. Therefore, the shift register 220a can sequentially output each emission control signal emit2[i], which becomes low-level together with the select signal select[i] in the second subfield 2F, by shifting the half clock VCLK cycle.

Since the output signal emit1[i] of the inverter $INV_{2i}$ has an inverted waveform of the emission control signal emit2[i], the shift register 220a can sequentially output each emission control signal emit1[i], which becomes low-level together with the select signal select[i] in the first subfield 1 F, by shifting the half clock VCLK cycle.

Since the flip-flops $FF_{1i}$ and the flip-flops $FF_{2i}$ have the same structure, a flip-flop of FIG. 10 can be used to represent both the flip-flops $FF_{1i}$ and the flip-flops $FF_{2i}$. Referring to FIG. 10, the flip-flop (e.g., $FF_{1i}$) includes a clocked inverter 211, and a latch including an inverter 212 and a clocked inverter 213. The clocked inverter 211 inverts an input signal (in) when the clock (clk) is high-level, and the inverter 212 inverts the output signal (/out) of the clocked inverter 211. When the clock (clk) is low-level, the output of the clocked inverter 211 is blocked, the output signal of the inverter 212 is inputted to the clocked inverter 213, and the output signal (/out) of the clocked inverter 213 is inputted to the inverter 212. As a result, the latch is formed. At this time, the output signal (out) of the inverter 212 is the output signal of the flip-flop, and the input signal (/out) of the inverter 212 is the inverted signal to the output signal (out). Therefore, the flip-flop can output the input signal (in) when the clock (clk) is high-level, and latch and output the input signal (in) in the high-level period of the clock (clk) when the clock (clk) is low-level.

As shown in FIG. 10, the signal (/out) inverted to the output signal (out) is outputted from the flip-flop (e.g., $FF_{2i}$) of the shift register 220a. Therefore, the inverted output signal (/out) of the flip-flop of FIG. 10 may be used as the emission control signal emit1[i] of the first subfield 1 F, and the inverter $INV_{2i}$ can be eliminated in the shift register 220a. In addition, the signal having the high-level signal in the first subfield 1 F is used as the start signal VSP2 in FIGs. 8 and 9, but a signal inverted to the start signal VSP2 may be used as the start signal of the shift register 220a. Then, the output signal of the flip-flop becomes the emission control signal emit1 [i] of the first subfield 1 F, and the output signal of the inverter $INV_{2i}$ becomes the emission control signal emit2[i] of the second subfield 2F.

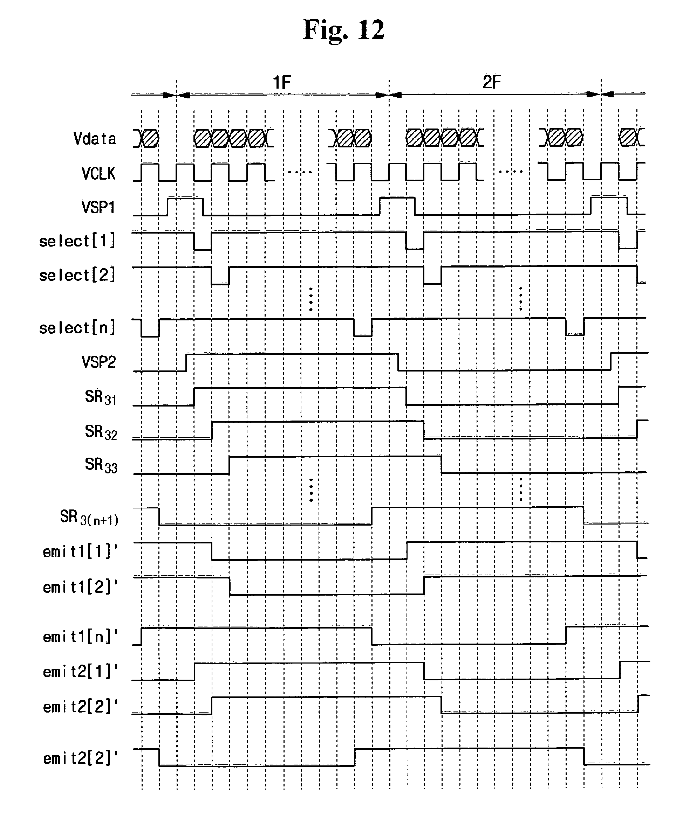

As described above, the emission control signal emit1[i] or emit2[i] is low-level when the select signal select[i] is low-level in the scan driver 200a. This signal timing can be applicable to the organic light emitting diode display device using the voltage programming method in which the data voltage is transmitted to the data line to be stored in the capacitor. However, in the organic light emitting diode display device using the current programming method, the current from the driving transistor needs to be blocked from the organic light emitting diodes when the data current are programmed to the pixel driver. That is, emission control signals emit1 [i]' and emit2[i]' should be high-level when the select signal select[i] is low-level. In addition, this signal timing may be applicable to the organic light emitting diode display device using the voltage programming method. These examples will be described with reference to FIGs. 11 and 12.

FIG. 11 shows a scan driver 200b in an organic light emitting diode display device according to an example useful for understanding the invention, and FIG. 12 shows a signal timing diagram in the scan driver 200b of FIG. 11. The scan driver 200b of FIGs. 11 and 12 use the same clock VCLK as the scan driver 200a shown in FIGs. 8 and 9.

As shown in FIG. 11, the scan driver 200b includes the shift register 210a for outputting the select signal select[i] and a shift register 220b for outputting the emission control signals emit1[i]' and emit2[i]'. The shift register 220b includes (n+1) flip-flops $FF_{31}$ to $FF_{3(n+1)}$, n NAND gates $NAND_{31}$ to $NAND_{3n}$, and n OR gates $OR_{31}$ to $OR_{3n}$. Here, a NAND gate and an inverter may be used instead of the OR gate $OR_{3i}$.

The clock VCLK is inputted to the flip-flops $FF_{3i}$, and the NAND gate $NAND_{3i}$ performs a NAND operation between the output signals $SR_{3i}$ and $SR_{3(i+1)}$ of the flip-flops $FF_{3i}$ and $FF_{3(i+1)}$ to output the emission control signal emit1[i]'. The OR gate $OR_{3i}$ performs an OR operation between the output signals $SR_{3i}$ and $SR_{3(i+1)}$ of the flip-flops $FF_{3i}$ and $FF_{3(i+1)}$ to output the emission control signal emit2[i]'.

As shown in FIG. 12, the start signal VSP2 shown in FIG. 9 is inputted to the flip-flop $FF_{3i}$. Therefore, the output signal $SR_{3i}$ of the flip-flop $FF_{3i}$ becomes high-level when the select signal select[i] becomes low-level in the first subfield 1 F, and becomes low-level when the select signal select[i] becomes low-level in the second subfield 2F. Since the NAND gate $NAND_{3i}$ outputs the low-level signal while both the output signal $SR_{3i}$ and $SR_{3(i+1)}$ of the flip-flops $FF_{3i}$ and $FF_{3(i+1)}$ are high-level, the emission control signal emit1[i]' becomes low-level when the select signal select[i] becomes high-level in the first subfield 1 F. In addition, since the OR gate $OR_{3i}$ outputs the high-level signal while both the output signal $SR_{3i}$ and $SR_{3(i+1)}$ of the flip-flops $FF_{3i}$ and $FF_{3(i+1)}$ are low-level, the emission control signal emit2[i]' becomes low-level when the select signal select[i] becomes high-level in the second subfield 2F.

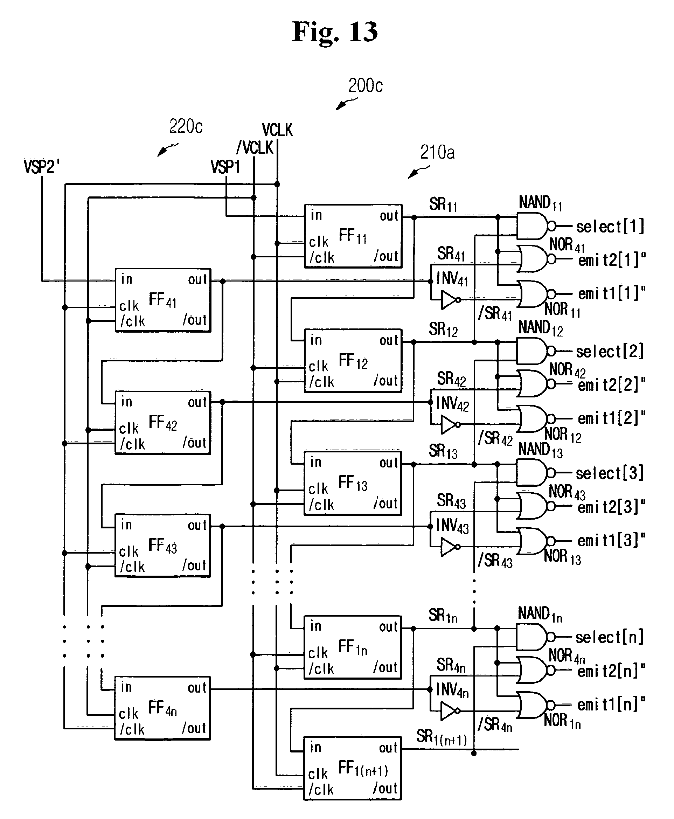

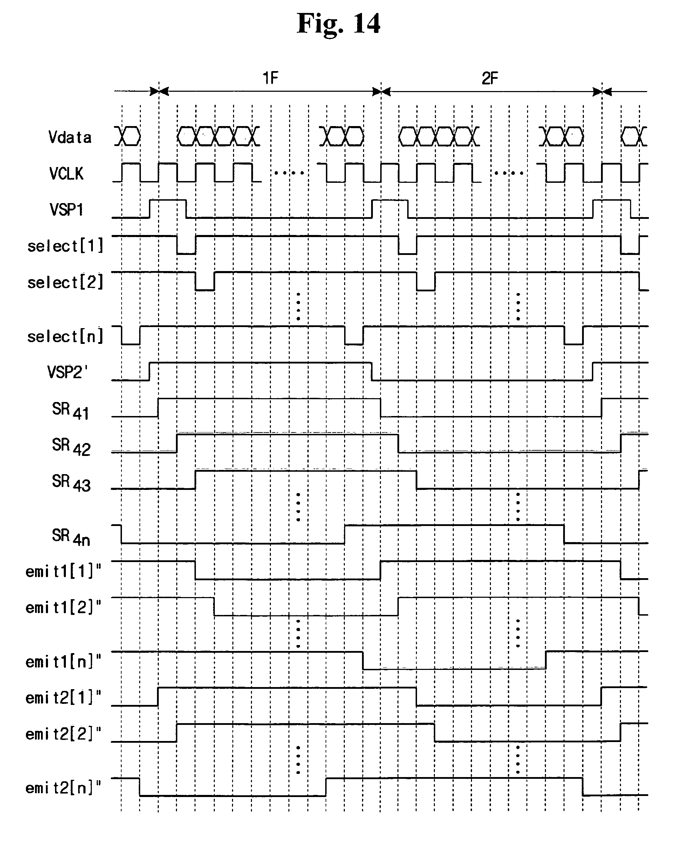

As described above, the emission control signals emit1[i]' and emit2[i]' are high-level when the select signal select[i] has the low-level signal. In addition, emission control signals emit1[i]" and emit2[i]" may be high-level when the previous and current select signals select [i-1] and select[i] have the low-level signals. This example will be described with reference to FIGs. 13 and 14.

FIG. 13 shows a scan driver 200c in an organic light emitting diode display device according to an example useful for understanding the invention, and FIG. 14 shows a signal timing diagram of the scan driver 200c shown in FIG. 13. The scan driver 200c of FIGs. 13 and 14 use the same clock VCLK as the scan driver 200a shown in FIGs. 8 and 9.

As shown in FIG. 13, the scan driver 200c includes the shift register 210a for outputting the select signal select[i] and a shift register 220c for outputting the emission control signals emit1[i]" and emit2[i]". The shift register 220c includes n flip-flops $FF_{41}$ to $FF_{4n}$, n inverters $INV_{41}$ to $INV_{4n}$, and 2n NOR gates $NOR_{11}$ to $NOR_{1n}$, and $NOR_{41}$ to $NOR_{4n}$.

The flip-flops $FF_{41}$ to $FF_{4n}$ and the inverters $INV_{41}$ to $INV_{4n}$ have the same structure as the flip-flops $FF_{21}$ to $FF_{2n}$ and the inverters $INV_{21}$ to $INV_{2n}$ of FIG. 8 except for the clocks VCLK and /VCLK. That is, the flip-flop $FF_{4i}$ uses the clock VCLK or /VCLK inverted to the clock /VCLK or VCLK of the flip-flop $FF_{2i}$ shown in FIG. 8. The NOR gate $NOR_{1i}$ performs a NOR operation between the output signal $SR_{1i}$ of the flip-flop $FF_{1i}$ and the inverted output signal $/SR_{4i}$ of the flip-flop $FF_{4i}$ to output the emission control signal emit1[i]" in the first subfield 1 F. The NOR gate $NOR_{4i}$ performs a NOR operation between the output signals $SR_{1i}$ and $SR_{4i}$ of the flip-flops $FF_{1i}$ and $FF_{4i}$ to output the emission control signal emit2 [i]" in the second subfield 2F.

As shown in FIG. 14, a start signal VSP2' is high-level in the high-level period of the clock VCLK in the first subfield 1 F and is low-level in the high-level period of the clock VCLK in the second subfield 2F. As a result, the output signal $SR_{4i}$ of the flip-flop $FF_{4i}$ has the high-level signal during a period corresponding to the first subfield 1 F and has the low-level signal during a period corresponding to the second subfield 2F. Therefore, the output signal $SR_{4i}$ of the flip-flop $FF_{4i}$ becomes high-level when the output signal $SR_{1i}$ of the flip-flop $FF_{1i}$ becomes high-level in the first subfield 1 F, and becomes low-level when the output signal $SR_{1i}$ of the flip-flop $FF_{1i}$ becomes high-level in the second subfield 2F.

Since the NOR gate $NOR_{1i}$ outputs the low-level signal while both the output signal $SR_{1i}$ of the flip-flop $FF_{1i}$ and the inverted output signal $/SR_{4i}$ of the flip-flop $FF_{4i}$ are low-level, the output signal emit1[i]" of the NOR gate $NOR_{1i}$ becomes low-level together with the output signal $SR_{1i}$ in the first subfield 1 F and becomes high-level together with the output signal $SR_{1i}$ in the second subfield 2F. Since the NOR gate $NOR_{4i}$ outputs the low-level signal while both the output signals $SR_{1i}$ and $SR_{4i}$ of the flip-flops $FF_{1i}$ and $FF_{4i}$ are low-level, the output signal emit2[i]" of the NOR gate $NOR_{4i}$ becomes low-level together with the output signal $SR_{1i}$ in the second subfield 2F and becomes high-level together with the output signal $SR_{1i}$ in the first subfield 1 F. Therefore, the emission control signals emit1[i]" and emit2[i]" are high-level when the previous and current select signals select [i-1] and select[i] have the low-level signals.

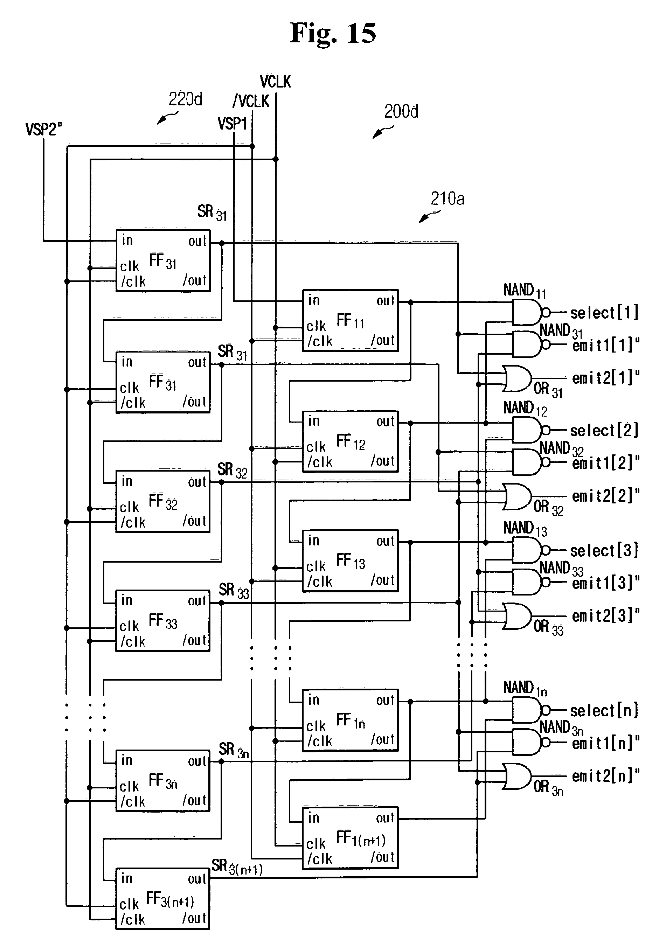

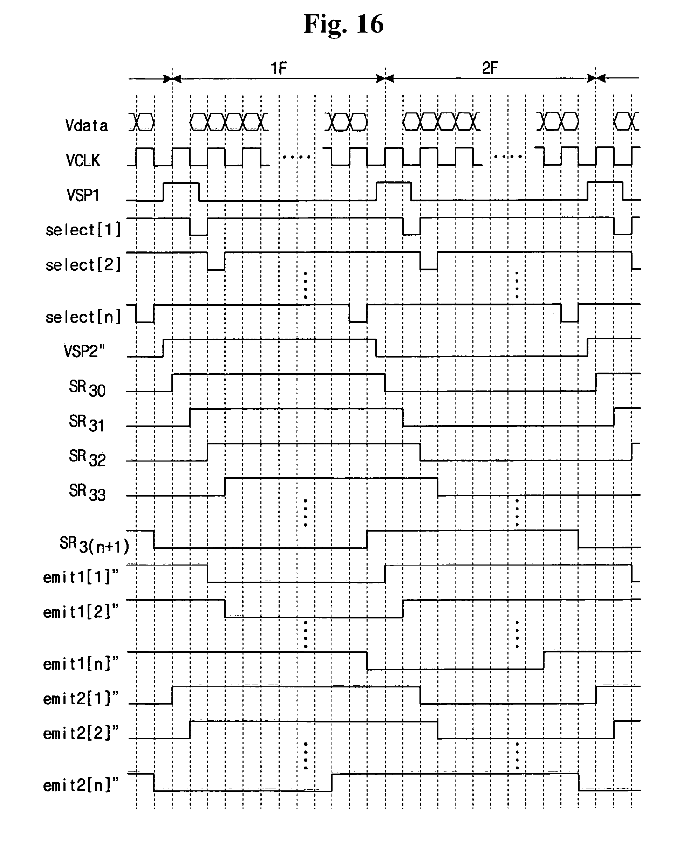

In addition, the emission control signals emit1 [i]" and emit2[i]" shown in FIG. 14 may be generated from the scan driver shown in FIG. 11. This exemplary example will be described with reference to FiGs. 15 and 16.

FIG. 15 shows a scan driver 200d in an organic light emitting diode display device according to another example useful for understanding the invention, and FIG. 16 shows a signal timing diagram of the scan driver 200d shown in FIG. 15.

As shown in FIG. 15, the scan driver 200d includes the shift register 210a for outputting the select signal select[i] and a shift register 220d for outputting the emission control signals emit1[i]" and emit2[i]". The shift register 220d further includes a flip-flop $FF_{30}$ before the flip-flop $FF_{31}$, which is different from the shift register 220b of FIG. 11, and a start signal VSP2" is inputted to the flip-flop $FF_{30}$. The flip-flop $FF_{30}$ receives the clock VCLK as the inner clock (clk).

In the shift register 220d, the $i^{th}$ NAND gate $NAND_{3i}$ performs a NAND operation between the output signals $SR_{3(i-1)}$ and $SR_{3(i+1)}$ of the $(i-1)^{th}$ and $(i+1)^{th}$ flip-flops $FF_{3(i-1)}$ and $FF_{3(i+1)}$ to output the emission control signal emit1[i]". The $i^{th}$ OR gate $OR_{3i}$ performs an OR operation between the output signals $SR_{3(i-1)}$ and $SR_{3(i+1)}$ of the $(i-1)^{th}$ and $(i+1)^{th}$ flip-flops $FF_{3(i-1)}$ and $FF_{3(i+1)}$ to output the emission control signal emit2[i]".

Referring to FIG. 16, the start signal VSP2" is high-level when the clock VCLK is high-level in the first subfield 1 F, and is low-level when the clock VCLK is high-level in the second subfield 2F. Then, the output

signal $SR_{3i}$ of the flip-flop $FF_{3i}$ is same as that $SR_{3i}$ shown in FIG. 12. Therefore, the emission control signals emit1 [i]" and emit2[i]" are high-level when the previous and current select signal select[i-1] and select[i] have the low-level signals.

As described above, the select signals and the emission control signals are generated from the two shift registers each including the plurality of flip-flops. Next, exemplary examples which may reduce the number of the flip-flops compared to these examples, will be described.

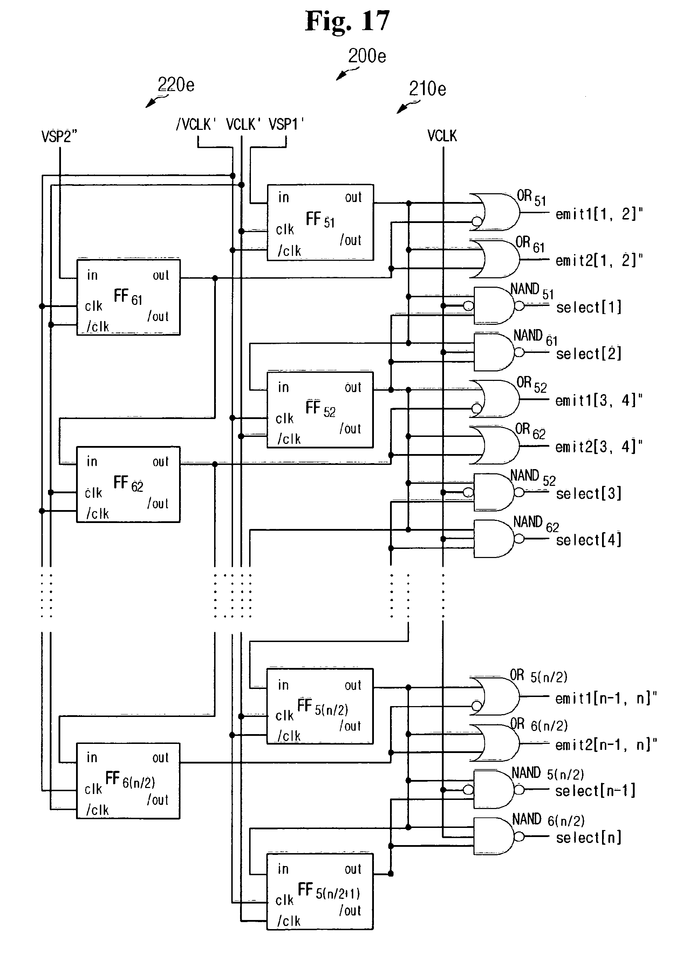

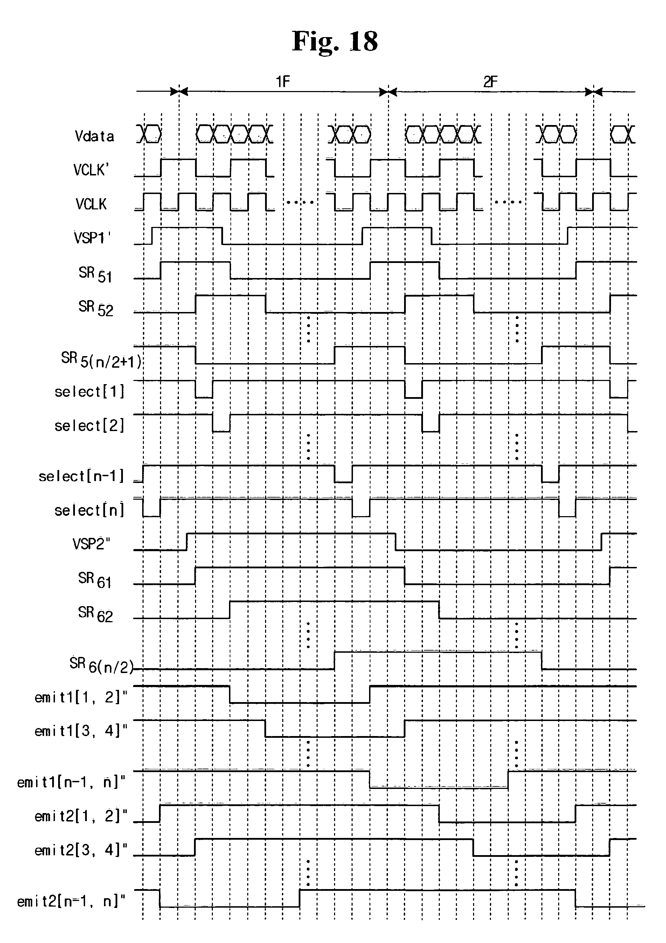

FIG. 17 shows a scan driver 200e in an organic light emitting diode display device according to another example useful for understanding the invention, and FIG. 18 shows a signal timing diagram of the scan driver 200e shown in FIG. 17. A clock VCLK' used in the scan driver 200e of FIGs. 17 and 18 has twice the period of the clock VCLK of FIGs. 8 to 16, and the inverted clock /VCLK' is not shown in FIG. 18.

As shown in FIG. 17, the scan driver 200e includes a shift register 210e for outputting the select signal select[i] and a shift register 220e for outputting the emission control signals emit1[i]" and emit2[i]". The shift register 210e includes ((n/2)+1) flip-flops $FF_{51}$ to $FF_{5(n/2+1)}$, n NAND gates $NAND_{51}$ to $NAND_{5(n/2)}$, and $NAND_{61}$ to $NAND_{6(n/2)}$, and the shift register 220e includes (n/2) flip-flops $FF_{61}$ to $FF_{6(n/2)}$, and n OR gates $OR_{51}$ to $OR_{5(n/2)}$, and $OR_{61}$ to $OR_{6(n/2)}$ (where 'n' is assumed to an even number).

The clocks VCLK' and /VCLK' of the flip-flop $FF_{5(j+1)}$ are inverted to the clocks /VCLK' and VCLK' of the adjacent flip-flops $FF_{5j}$ in the shift register 210e (where 'j' is a positive integer less than or equal to 'n/2'), and the clock VCLK' is inputted to the flip-flop $FF_{51}$ as the inner clock (clk). As shown in FIG. 18, since the start signal VSP1' has the high-level signal in the high-level period of the one clock VCLK cycle in each of the subfields 1 F and 2F, the flip-flops $FF_{51}$ to $FF_{5(n/2+1)}$ may sequentially output each output signal $SR_{5i}$ by shifting the high-level signal by the half clock VCLK' cycle. Here, the output signal $SR_{5i}$ has the high-level signal during one clock VCLK' cycle in each of the subfields 1 F and 2F.

The $j^{th}$ NAND gate $NAND_{5j}$ performs a NAND operation of the output signals $SR_{5j}$ and $SR_{5(j+1)}$ of the flip-flops $FF_{5j}$ and $FF_{5(j+1)}$, and the inverted clock /VCLK to output the $(2j-1)^{th}$ select signal select[2j-1]. Therefore, the select signal select[2j-1] has the low-level signal during a low-level period of the clock VCLK of a period in which the both output signals $SR_{5j}$ and $SR_{5(j+1)}$ are high-level. The $j^{th}$ NAND gate $NAND_{6j}$ performs the NAND operation of the output signals $SR_{5j}$ and $SR_{5(j+1)}$ of the flip-flops $FF_{5j}$ and $FF_{5(j+1)}$, and the clock VCLK to output the $(2j)^{th}$ select signal select[2j]. Therefore, the select signal select[2j] has the low-level signal during a high-level period of the clock VCLK of the period in which the both output signals $SR_{5j}$ and $SR_{5(j+1)}$ are high-level.

The clocks VCLK' and /VCLK' of the flip-flop $FF_{6(j+1)}$ are inverted to the clocks /VCLK' and VCLK' of the adjacent flip-flops $FF_{6j}$ in the shift register 212e, and the inverted clock /VCLK' is inputted to the flip-flop $FF_{61}$ as the inner clock (clk). As shown in FIG. 18, since the start signal VSP2" has the high-level signal in the first subfield 1 F, the flip-flops $FF_{61}$ to $FF_{6(n/2)}$ may sequentially output each output signal $SR_{6i}$ by shifting the high-level signal by the half clock VCLK' cycle. Here, the output signal $SR_{6i}$ has the high-level signal during a period corresponding to the first subfield 1 F.

The $j^{th}$ OR gate $OR_{5j}$ performs an OR operation of the output signal $SR_{5j}$ of the flip-flop $FF_{5j}$ and the inverted output signal $/SR_{6j}$ of the flip-flop $FF_{6j}$ to output the $(2j-1)^{th}$ and $(2j)^{th}$ emission control signals emit1[2j-1]" and emit1[2j]" (shown as emit1[2j-1, 2j] in FIG. 17) in the first subfield 1 F. Therefore, the emission control signals emit1[2j-1]" and emit1[2j]" have the low-level signal during a period in which the both output signal $SR_{5j}$ of the flip-flop $FF_{5j}$ and inverted output signal $/SR_{6j}$ of the flip-flop $FF_{6j}$ are low-level. The $j^{th}$ OR gate $OR_{6j}$ performs the OR operation of the output signal $SR_{5j}$ of the flip-flop $FF_{5j}$ and the output signal $SR_{6j}$ of the flip-flop $FF_{6j}$ to output the $(2j-1)^{th}$ and $(2j)^{th}$ emission control signals emit2[2j-1]" and emit2[2j]" (shown as emit2[2j-1, 2j] in FIG. 17) in the second subfield 2F. Therefore, the emission control signals emit2[2j-1]" and emit2[2j]" have the low-level signal during a period in which the both output signals $SR_{5j}$ and $SR_{6j}$ of the flip-flops $FF_{5j}$ and $FF_{6j}$ are low-level.

As a result, as shown in FIG. 18, the emission control signals emit1[2j-1]" and emit2[2j-1]" are high-level when the previous and current select signals select[2j-2] and select[2j-1] have the low-level signals, and the emission control signals emit1[2j]" and emit2[2j]" are high-level when the previous and current select signals select[2j-1] and select[2j] have the low-level signal.

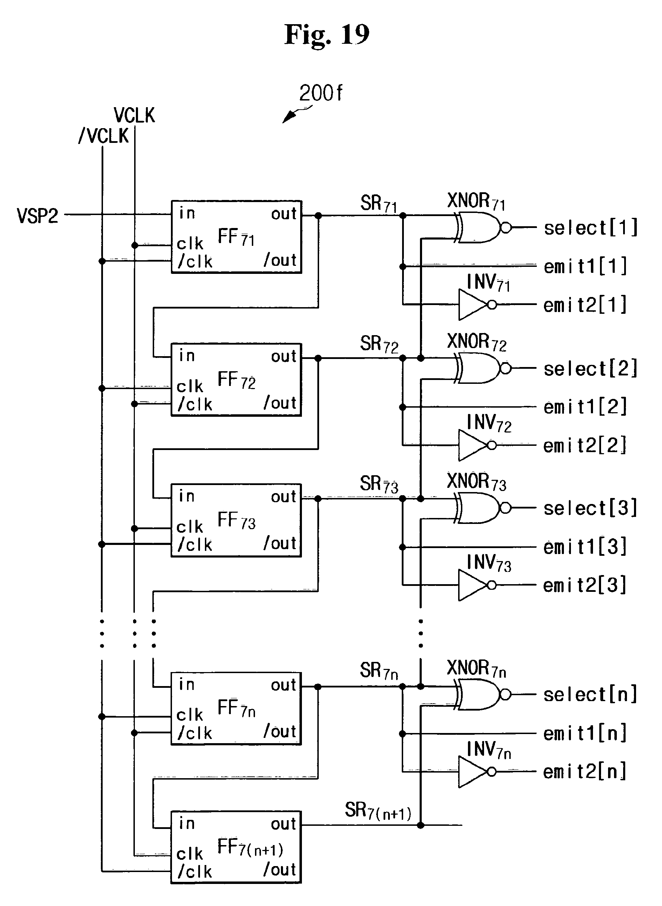

Next, example which use one shift register to output the select signals and the emission control signals will be described with reference to FIGs. 19 to 26.

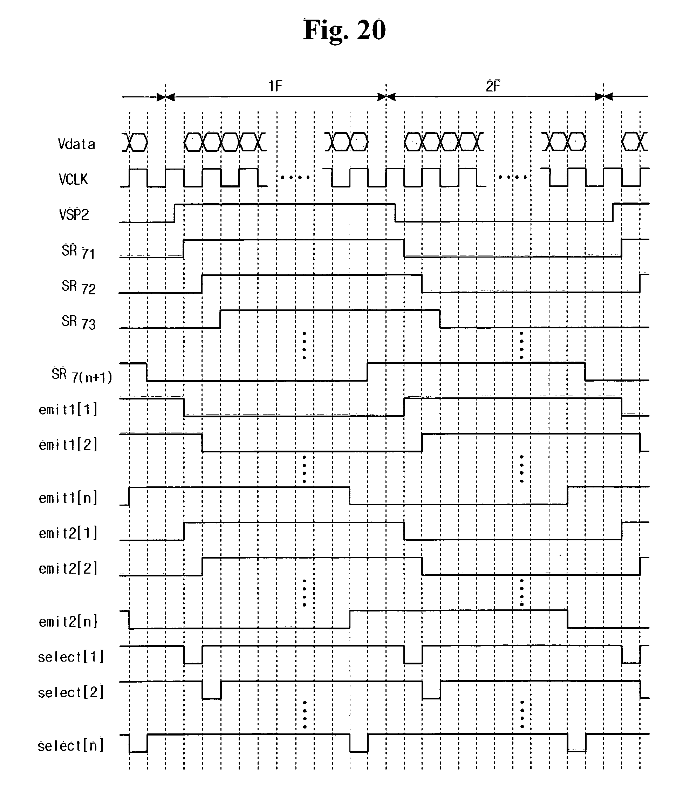

First, a scan driver 200f for outputting the emission control signals emit1[i] and emit2[i] shown in FIG. 9 will be described with reference to FiGs. 19 and 20.

FIG. 19 shows the scan driver 200f in an organic light emitting diode display device according to another example useful for understanding the invention, and FIG. 20 shows a signal timing diagram of the scan driver 200f shown in FIG. 19.

As shown in FIG. 19, the scan driver 200f includes (n+1) flip-flops $FF_{71}$ to $FF_{7(n+1)}$, n XNOR gates $XNOR_{71}$ to $XNOR_{7n}$, and n inverters $INV_{71}$ to $INV_{7n}$, and operates as a shift register. The flip-flops $FF_{71}$ to $FF_{7(n+1)}$ and the n inverters $INV_{71}$ to $INV_{7n}$ have the same structure as the flip-flops $FF_{11}$ to $FF_{1(n+1)}$ and the n inverters $INV_{21}$ to $INV_{2n}$ shown in FIG. 8. In addition, the flip-flops $FF_{71}$ to $FF_{7(n+1)}$ use the clock VCLK and the start signal VSP2 shown in FIG. 9.

Therefore, an output signal $SR_{7i}$ of the flip-flop $FF_{7i}$ is same as the emission control signal emit1[i] of the first subfield 1 F, and the output signal of the inverter $INV_{7i}$ is same as the emission control signal emit2[i] of the second subfield 2F. In addition, the inverted output signal (/out) of the flip-flop $FF_{7i}$ may be used as the emission control signal emit2[i] instead of the output signal of the inverter $INV_{7i}$.

The XNOR gate $XNOR_{7i}$ performs XNOR operation between the output signals $SR_{7i}$ and $SR_{7(i+1)}$ of the flip-flops $FF_{7i}$ and $FF_{7(i+1)}$ to output the select signal select[i]. That is, the XNOR gate $XNOR_{7i}$ outputs the low-level select signal select[i] while the output signals $SR_{7i}$ and $SR_{7(i+1)}$ of the flip-flops $FF_{7i}$ and $FF_{7(i+1)}$ have the different levels. Accordingly, the select signal select[i] has the low-level signals during a period corresponding to the half clock VCLK cycle from the falling edge of the output signal $SR_{7i}$ and a period corresponding to the half clock VCLK cycle from the rising edge of the output signal $SR_{7i}$. As a result, the emission control signals emit1[i] and emit2[i] become low-level together with the select signal select[i] in the first and second subfields 1 F and 2F, respectively.

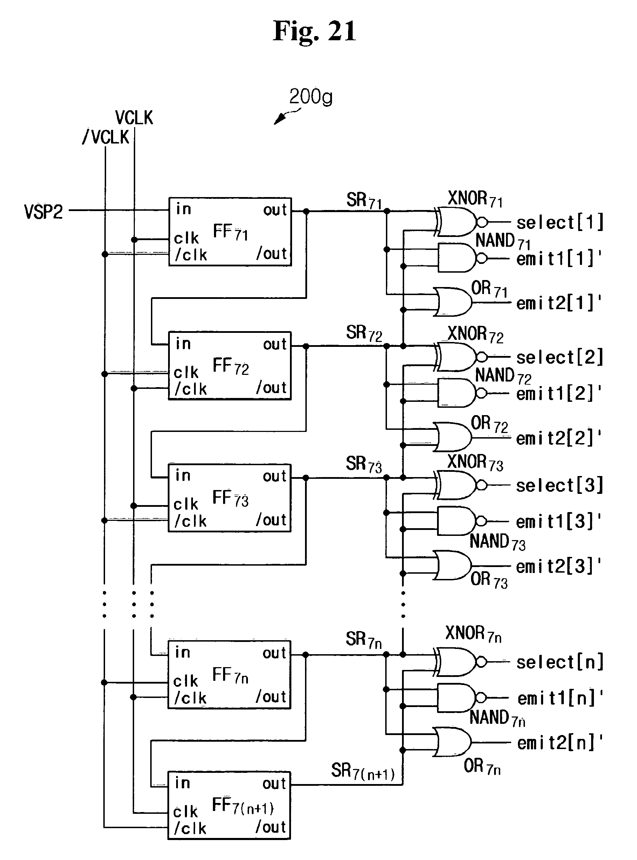

Next, scan drivers 200g and 220h for outputting the emission control signals emit1[i]' and emit2[i]' shown in FIG. 12 will be described with reference to FIGs. 21 to 23.

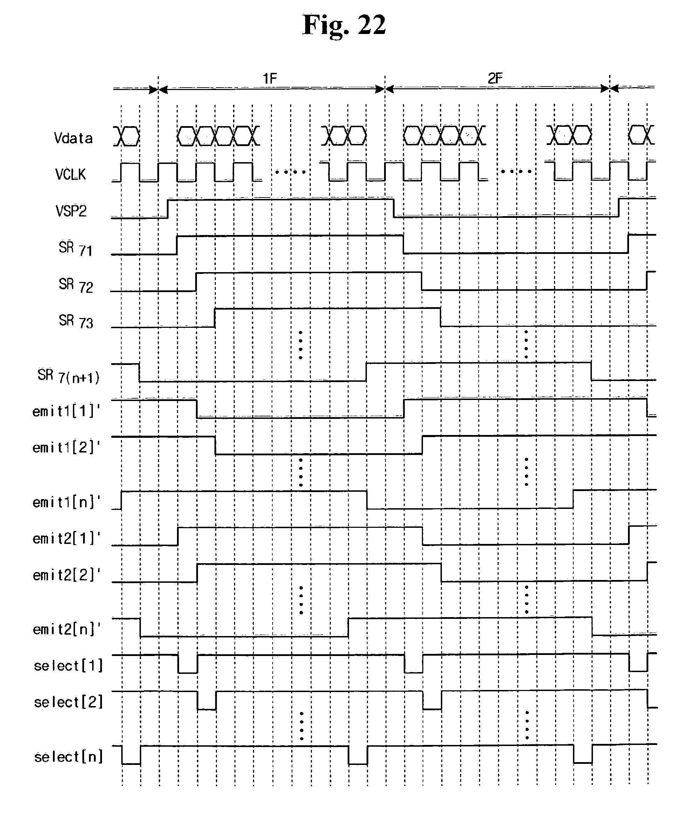

FIG. 21 shows the scan driver 200g in an organic light emitting diode display device according to another example useful for understanding the invention, and FIG. 22 shows a signal timing diagram of the scan driver 200g shown in FIG. 21.

As shown in FIG. 21, the scan driver 200g has the same structure as the scan driver 200f of FIG. 19 except that the emission control signals emit1[i]' and emit2[i]' are generated from a NAND gate $NAND_{7i}$ and an OR gate $OR_{7i}$.

In more detail, the $i^{th}$ NAND gate $NAND_{7i}$ performs a NAND operation between the output signals $SR_{7i}$ and $SR_{7(i+1)}$ of the flip-flops $FF_{7i}$ and $FF_{7(i+1)}$ to output the emission control signal emit1[i]' of the first subfield 1 F, and the $i^{th}$ OR gate $OR_{7i}$ performs an OR operation between the output signals $SR_{7i}$ and $SR_{7(i+1)}$ of the flip-flops $FF_{7i}$ and $FF_{7(i+1)}$ to output the emission control signal emit2[i]' of the second subfield 2F. Then, since the emission control signals emit1[i]' and emit2[i]' are at high-level in a period corresponding to the low-level signal of the select signal select[i], the emission control signals emit1[i]' and emit2[i]' shown in FIG. 22 can be outputted.

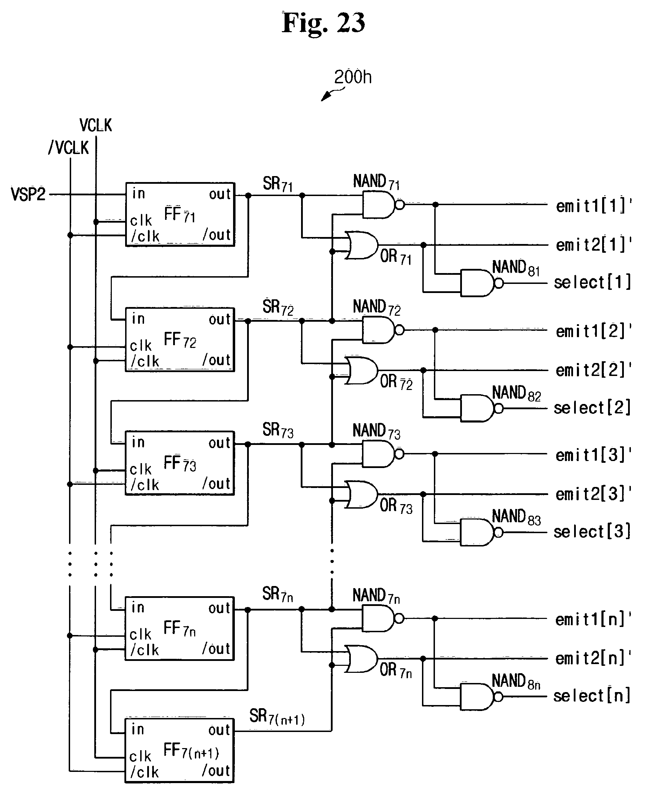

FIG. 23 shows the scan driver 200h in an organic light emitting diode display device according to a further example useful for understanding the invention.

As shown in FIG. 23, the scan driver 200h has the same structure as the scan driver 200g of FIG. 21 except that the select signal select[i] are generated from a NAND gate $NAND_{8i}$.

Referring to FIG. 22, the two emission control signal emit1[i]' and emit2[i]' have high-levels during a period in which the select signal select[i] has low-level. Therefore, the select signal select[i] can be generated by the NAND operation of the emission control signals emit1[i]' and emit2[i]' which is performed by the NAND gate $NAND_{8i}$.

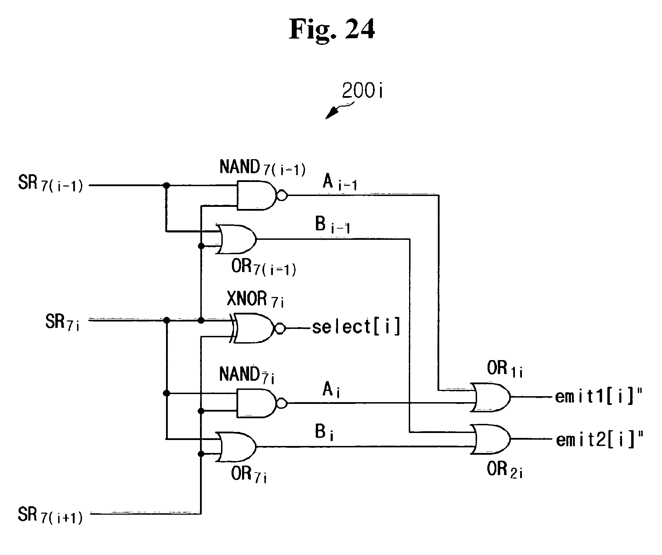

Next, a scan driver 200i for outputting the emission control signals emit1[i]" and emit2[i]" shown in FIG. 14 will be described with reference to FIGs. 24 to 26.

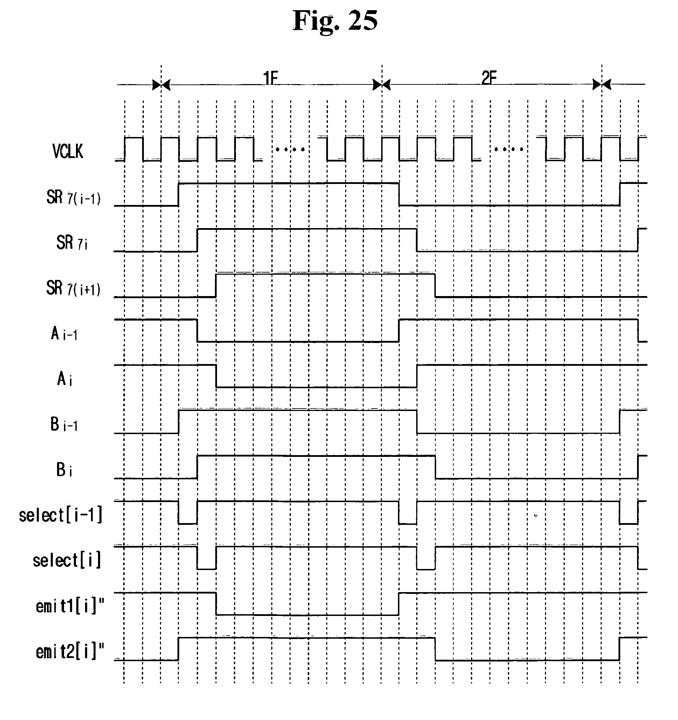

FIG. 24 shows the scan driver 200i in an organic light emitting diode display device according to another example useful for understanding the invention, and FIG. 25 shows a signal timing diagram of the scan driver 200i shown in FIG. 24.

The scan driver 200i of FIG. 24 further includes 2n OR gates $OR_{11}$ to $OR_{1n}$ and $OR_{21}$ to $OR_{2n}$ in addition to the elements of the scan driver 200g of FIG. 21, and the flip-flops $FF_{71}$ to $FF_{7n}$ are not shown in FIG. 24. In addition, the $i^{th}$ OR gates $OR_{1i}$ and $OR_{2i}$, $(i-1)^{th}$ and $i^{th}$ NAND gates $NAND_{7(i-1)}$ and $NAND_{7i}$, $(i-1)^{th}$ and $i^{th}$ OR gates $OR_{7(i-1)}$ and $OR_{7i}$, and $i^{th}$ XNOR gate $XNOR_{7i}$ are shown in FIG. 24. In FiGs. 24 and 25, the signals $SR_{7(i-1)}$, $SR_{7i}$, and $SR_{7(i+1)}$ respectively correspond to the output signals of the flip-flops $FF_{7(i-1)}$, $FF_{7i}$, and $FF_{7(i+1)}$, and signals $A_i$ and $B_i$ respectively correspond to the emission control signals emit1[i]' and emit2[i]' of the scan driver 200g shown in FIG. 21.

As shown in FIG. 25, the OR gate $OR_{1i}$ performs an OR operation of the signals $A_{i-1}$ and $A_i$ to output the emission control signals emit1[i]" during a period in which the both signals $A_{i-1}$ and $A_i$ are low-level. In addition, the OR gate $OR_{2i}$ performs an OR operation of the signals $B_{i-1}$ and $B_i$ to output the emission control signals emit2[i]" during a period in which the both signals $B_{i-1}$ and $B_i$ are low-level. These emission control signals emit1[i]" and emit2[i]" are same as those shown in FIG. 14.

In addition, if the output signals $A_{i-k}$ and $A_{i+p}$ of the $(i-k)^{th}$ and $(i+p)^{th}$ NAND gates $NAND_{i-k}$ and $NAND_{i+p}$ are inputted to the $i^{th}$ OR gates $OR_{1i}$ and $OR_{2i}$ (where 'k' and 'p' are respectively positive integers), the low-level periods of the emission control signals emit1[i]" and emit2[i]" may be controlled by an integral multiple of the half clock VCLK cycle.

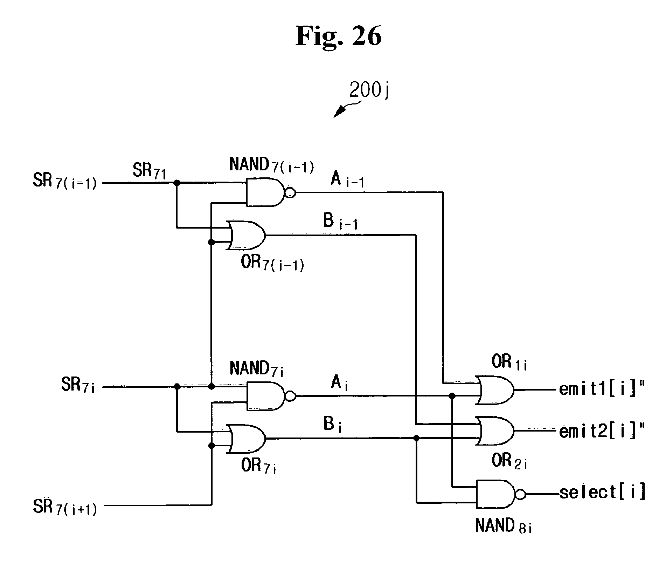

FIG. 26 shows a scan driver 200j in an organic light emitting diode display device according an additional example useful for understanding the invention.

As shown in FIG. 26, the scan driver 200j includes a NAND gate $NAND_{8i}$ instead of the XNOR gate $XNOR_{7i}$ in the scan driver 200i of FIG. 24. The $i^{th}$ NAND gate $NAND_{8i}$ performs a NAND operation of the output signal $A_i$ of the $i^{th}$ NAND gate $NAND_{7i}$ and the output signal $B_i$ of the $i^{th}$ OR gate $OR_{7i}$ to output the select signal select[i] as described in reference to FIG. 23.

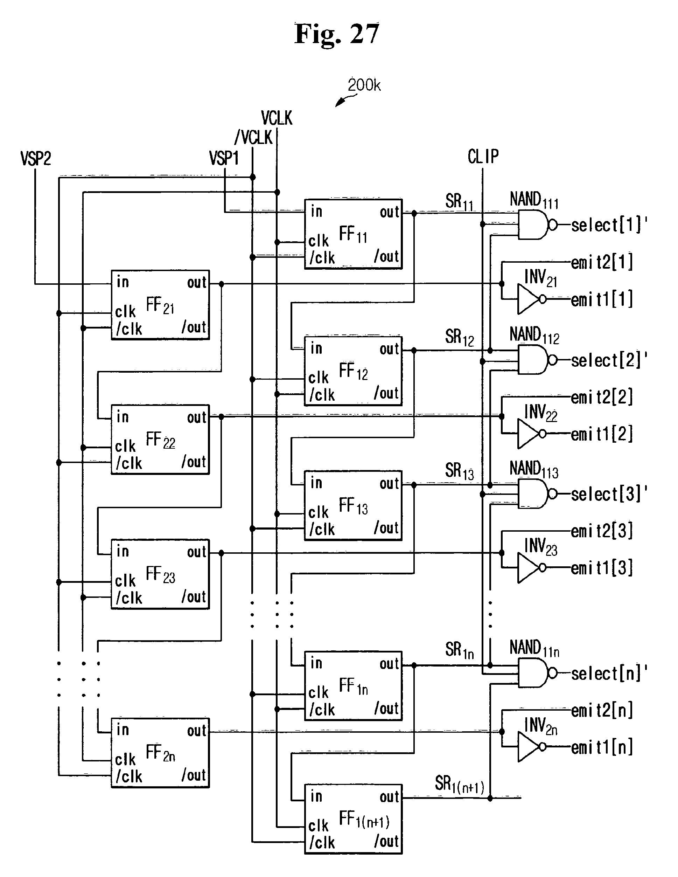

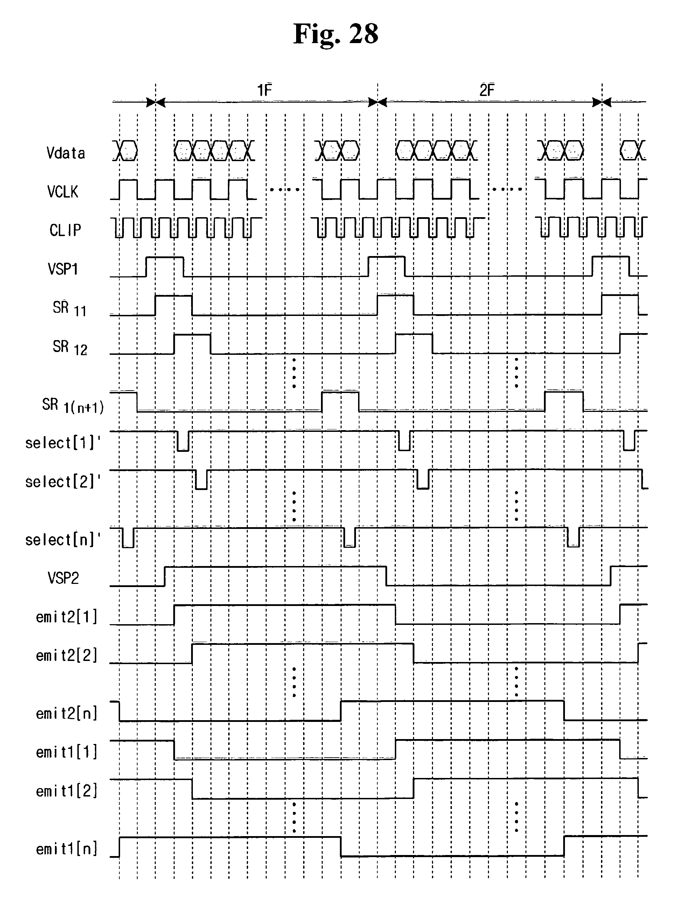

In the above examples, the cases in which the width of the low-level signal of the select signal select[i] is same as the half clock VCLK cycle have been described. That is, the rising edge of the select signal select[i-1] corresponds to the falling edge of the select signal select[i]. In other examples, however, the falling edge of the select signal select[i] may be apart from the rising edge of the select signal select[i-1]. That is, the width of the low-level signal of the select signal select[i] may be shorter than the half clock VCLK cycle. One such example will be described with reference to FIGs. 27 and 28.

FIG. 27 shows a scan driver 200k in an organic light emitting diode display device according to another example useful for understanding the invention, and FIG. 28 shows a signal timing diagram of the scan driver 200k shown in FIG. 27. In FIGs. 27 and 28, the case in which the low-level signal width (e.g., low-level pulse width) of the select signal is reduced in the scan driver 200a of FIGs. 8 and 9 will be described.

As shown in FIGs. 27 and 28, the scan driver 200k has the same structure as the scan driver 200a of FIGs. 8 and 9 except for a clip signal CLIP, and NAND gates $NAND_{11i}$ (i.e., $NAND_{111}$ to $NAND_{11n}$), to which the clip signal CLIP is applied in addition to the output signals $SR_{1i}$ and $SR_{1(i+1)}$. The clip signal CLIP has a cycle corresponding to the half clock VCLK cycle, and has the low-level signal whose width is shorter than the half clock VCLK cycle. In addition, the low-level period of the clip signal CLIP includes the falling edge or the rising edge of the clock VCLK.

Then, the NAND gate $NAND_{11i}$ outputs the low-level signal of the select signal select[i]' (i.e., one of select signals select[1]' to select[n]') during a period in which the clip signal CLIP is high-level. That is, the falling edge of the select signal select[i]' is apart from the rising edge of the select signal select[i-1]' by the low-level signal width (e.g., low-level pulse width) of the clip signal CLIP.

The principles of the example described in FIGs. 27 and 28 may also be applicable to the other examples described above.

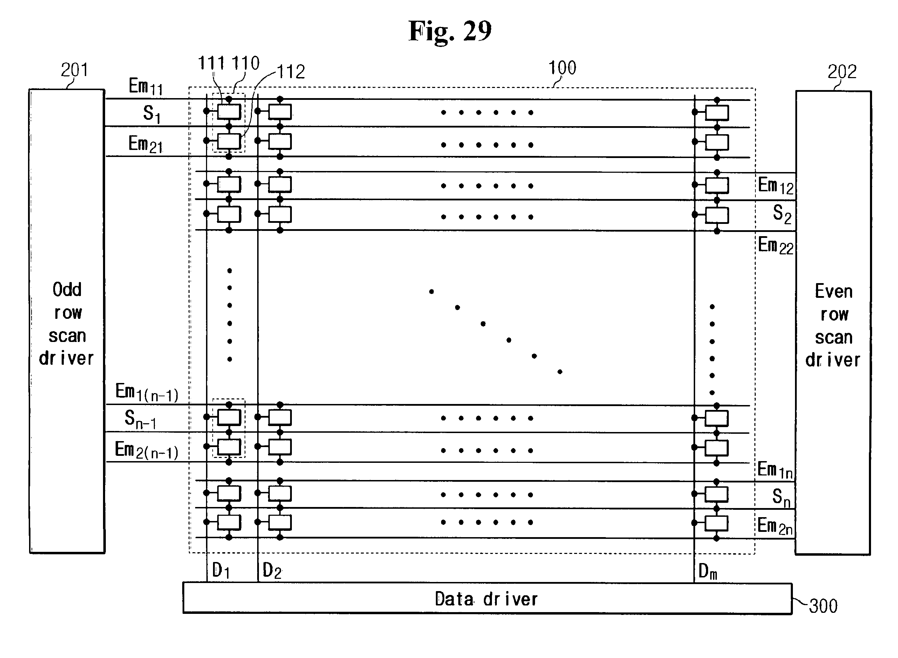

In addition, the scan driver may be divided into a scan driver for driving the unit pixels formed on the odd row (hereinafter, "an odd row scan driver") and a scan driver for driving the unit pixels formed on the even row (hereinafter, "an even row scan driver"). This example will be described with reference to FIGs. 29 to 31.

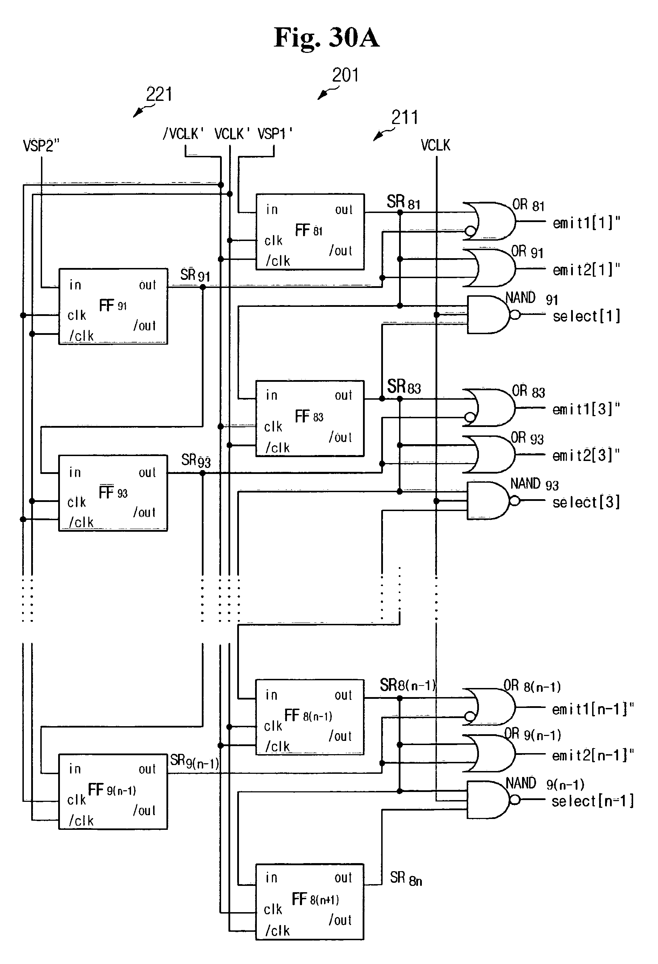

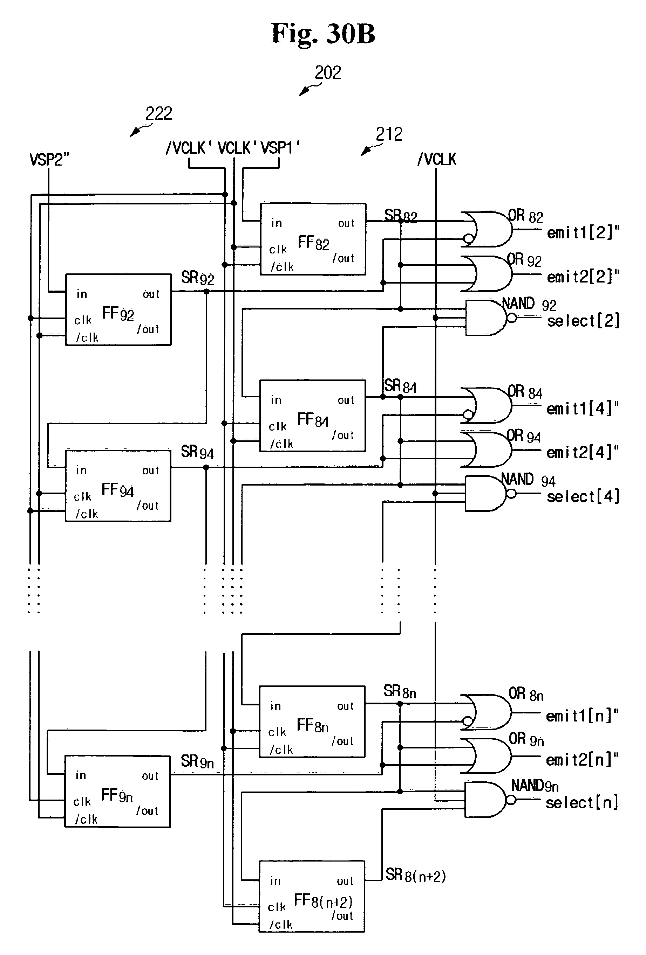

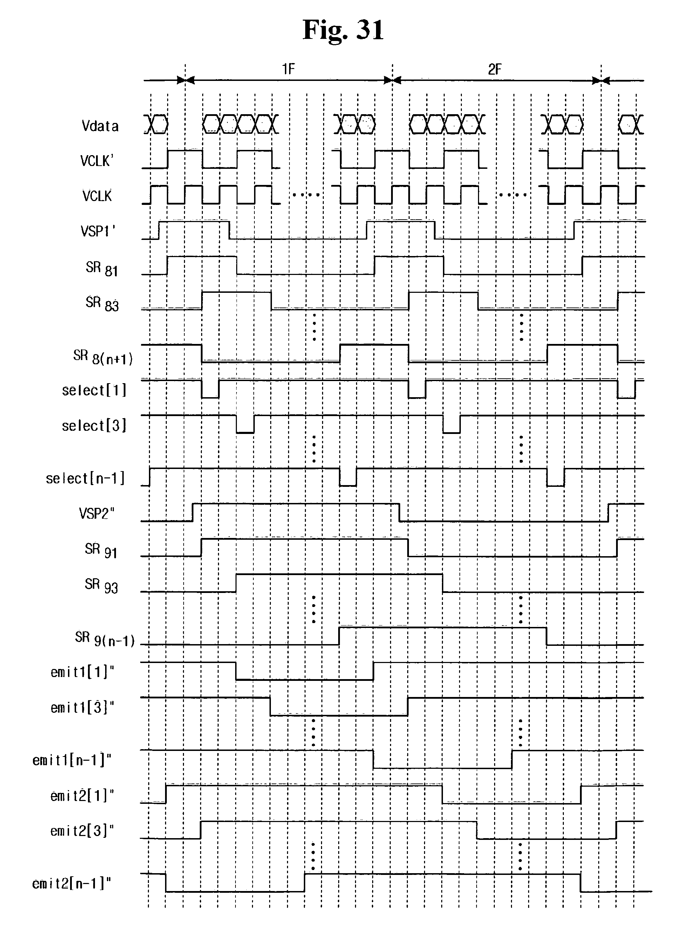

FIG. 29 shows a plan view of an organic light emitting diode display device according to another example useful for understanding the invention, FiGs. 30A and 30B respectively show odd row and even row scan drivers 201 and 202 in the organic light emitting diode display device, and FIG. 31 shows a signal timing diagram of the odd row scan driver 201 shown in FIG. 30A.

As shown in FIG. 29, the organic light emitting diode display device has the same structure as that of FIG. 1 except for the scan drivers 201 and 202.

The odd row scan driver 201 is formed on one side of the display area 100, and sequentially transmits the select signals select[2j-1] to the odd-numbered select scan lines $S_{2j-1}$ (where 'j' is a positive integer less than or equal to n/2). The even row scan driver 202 is formed on the other side of the display area 100, and sequentially transmits the select signals select[2j] to the even-numbered select scan lines $S_{2j}$. In addition, the odd row scan driver 201 sequentially transmits emission control signals emit1[2j-1]" to the odd-numbered emit scan lines $Em_{1(2j-1)}$ in the first subfield 1 F, and sequentially transmits emission control signals emit2[2j-1]" to the odd-numbered emit scan lines $Em_{2(2j-1)}$ in the second subfield 2F. The even row scan driver 202 sequentially transmits emission control signals emit1[2j]" to the even-numbered emit scan lines $Em_{1(2j)}$ in the first subfield 1F, and sequentially transmits emission control signals emit2[2j]" to the even-numbered emit scan lines $Em_{2(2j)}$ in the second subfield 2F.

Referring to FIG. 30A, the odd row scan driver 201 has a structure in which NAND gates $NAND_{61}$ to $NAND_{6(n/2)}$ for even-numbered select signals are eliminated from the scan driver 200e shown in FIG. 17. In more detail, the odd row scan driver 201 includes a shift register 211 for outputting the odd-numbered select signals select[2j-1] and a shift register 221 for outputting the odd-numbered emission control signals emit1[2j-1]" and emit2[2j-1]". The shift register 211 includes ((n/2)+1) flip-flops $FF_{81}$, $FF_{83}$, ..., $FF_{8(n+1)}$, and (n/2) NAND gates $NAND_{91}$, $NAND_{93}$, ..., $NAND_{9(n-1)}$, and the shift register 221 includes (n/2) flip-flops $FF_{91}$, $FF_{93}$, ..., $FF_{9(n-1)}$, and n OR gates $OR_{81}$, $OR_{83}$, ..., $OR_{8(n-1)}$, and $OR_{91}$, $OR_{93}$, ..., $OR_{9(n-1)}$.

Referring to FIG. 30B, the even row scan driver 202 has a structure in which the NAND gates $NAND_{51}$ to $NAND_{5(n/2)}$ for odd-numbered select signals are eliminated from the scan driver 200e shown in FIG. 17. In more detail, the even row scan driver 202 includes a shift register 212 for outputting the even-numbered select signal select[2j] and a shift register 222 for outputting the even-numbered emission control signals emit1[2j]" and emit2[2j]". The shift register 212 includes ((n/2)+1) flip-flops $FF_{82}$, $FF_{84}$, ..., $FF_{8(n+2)}$, and (n/2) NAND gates $NAND_{92}$, $NAND_{94}$, ..., $NAND_{9n}$, and the shift register 212 includes (n/2) flip-flops $FF_{92}$, $FF_{94}$, ..., $FF_{9n}$, and n OR gates $OR_{82}$, $OR_{84}$, ..., $OR_{8n}$, and $OR_{92}$, $OR_{94}$, ..., $OR_{9n}$.

Referring to FIGs. 30A, 30B and 31, the start signal VSP1' shown in FIG. 18 is inputted to the flip-flops $FF_{81}$ and $FF_{82}$, and the start signal VSP2" shown in FIG. 18 is inputted to the flip-flops $FF_{91}$ and $FF_{92}$. The NAND gate $NAND_{9(2j-1)}$ of the scan driver 201 performs a NAND operation of the output signals $SR_{8(2j-1)}$ and $SR_{8(2j-1)}$ of the flip-flops $FF_{8(2j-1)}$ and $FF_{8(2j+1)}$ and the clock VCLK to output the $(2j-1)^{th}$ select signal select[2j-1]. In addition, the NAND gate $NAND_{9(2j)}$ of the scan driver 202 performs a NAND operation of the output signals $SR_{8(2j)}$ and $SR_{8(2j+2)}$ of the flip-flops $FF_{8(2j)}$ and $FF_{8(2j+2)}$ and the inverted clock /VCLK to output the $(2j)^{th}$ select signal select[2j].

In the scan driver 201, the OR gate $OR_{8(2j-1)}$ performs an OR operation of the output signal $SR_{8(2j-1)}$ of the flip-flop $FF_{8(2j-1)}$ and the inverted output signal $/SR_{9(2j-1)}$ of the flip-flop $FF_{9(2j-1)}$ to output the $(2j-1)^{th}$ emission control signal emit1[2j-1]", and the OR gate $OR_{9(2j-1)}$ performs an OR operation of the output signals $SR_{8(2j-1)}$ and $SR_{9(2j-1)}$ of the flip-flops $FF_{8(2j-1)}$ and $FF_{9(2i-1)}$ to output the $(2j-1)^{th}$ emission control signal emit2[2j-1]". In the scan driver 202, the OR gate $OR_{8(2j)}$ performs an OR operation of the output signal $SR_{8(2j)}$ of

the flip-flop $FF_{8(2j)}$ and the inverted output signal $/SR_{9(2j)}$ of the flip-flop $FF_{9(2j)}$ to output the $(2j)^{th}$ emission control signal emit1[2j]", and the OR gate $OR_{9(2j)}$ performs an OR operation of the output signals $SR_{8(2j)}$ and $SR_{9(2j)}$ of the flip-flops $FF_{8(2j)}$ and $FF_{9(2j)}$ to output the $(2j)^{th}$ emission control signal emit2[2j]".

The principles of the examples described in FIGs. 29 to 31 may also be applicable to the other examples described above.

In the above examples, the cases in which the select signals and the emission control signals provided by the scan driver are directly applied to the select scan lines and the emit scan lines have been shown. In other embodiments, however, one or more buffers may be formed between the display area 100 and the scan driver 200 (or the scan drivers 201 and 202). In addition, one or more level shifters which change the levels of the select signals and the emission control signals may also be formed between the display area 100 and the scan driver 200 (or the scan drivers 201 and 202).

According to the exemplary embodiments of the present invention, the plurality of sub-pixels share the select scan line and the pixel driver in the unit pixel. As a result, the sub-pixels can be easily arranged in the unit pixel, and the aperture ratio of the unit pixel can be improved. In addition, since the number of the select scan lines is reduced compared to that of the number of the row lines, the number of the output terminals and the dimension of the scan driver can be reduced. Further, since the dimension of the scan driver is reduced, the non-emission area can be reduced when the scan driver and the unit pixels are formed on the same substrate.

According to the other exemplary embodiments of the present invention, the number of the flip-flops can be reduced in the scan driver for outputting the select signals and the emission control signals of the first and second subfields.

**Claims**

1. A display device comprising:

    a plurality of unit pixels (110) arranged in rows and for displaying an image during a field of a video signal, the field being divided into a plurality of subfields including a first subfield (1F) and a second subfield (2F), and each of the unit pixels (110) including a plurality of light emitting diode elements including first and second light emitting diode elements ($OLED_{R1}$, $OLED_{R2}$), a plurality of emission control transistors (M3a, M3b), the plurality of light emitting diode elements ($OLED_{R1}$, $OLED_{R2}$) of the one unit pixel (110) being arranged in a column direction and having a cathode directly connected to a power supply voltage (VSS), wherein each light emitting diode element ($OLED_{R1}$, $OLED_{R2}$) is connected to a drain of a corresponding emission control transistor (M3a, M3b);
a plurality of data lines (D1-Dm) extending in the column direction and for transmitting data signals;
a plurality of select scan lines (S1-Sn) extending in a row direction and for transmitting select signals, each of the select scan lines (S1-Sn) being coupled to a corresponding one of the rows of the unit pixels (110);
a plurality of emit scan lines (Emll-Em2n) for transmitting emission control signals, each of the emit scan lines (Emll-Em2n) being coupled to a gate of a corresponding one of the emission control transistors (M3a, M3b); and
a data driver (300) for transmitting a data signal to at least one of the data lines (D1-Dm) of the unit pixels (110) coupled to a corresponding one of the select lines (S1-Sn) to which one of the select signals is applied, and
a scan driver (200) for applying the select signals to the select scan lines (S1-Sn) and for applying the emission control signals to the emit scan lines (Em11-Em2n), in each of the plurality of subfields (1 F, 2F), wherein the scan driver comprises a first shift register for sequentially outputting the plurality of select signals in each of the plurality of subfields; and a second shift register for sequentially outputting the first and second emission control signals,
a pixel driver (115, 115') for each of the unit pixels (110) for storing the corresponding one of the data signals in response to a first pulse of a corresponding one of the select signals in each of the plurality of subfields (IF, 2F), and for outputting a driving current ($I_{OLED}$) corresponding to the corresponding one of the data signals the pixel driver (115, 115') comprising: a driving transistor (M1, M11) having a source, a gate, and a drain, for providing a driving current ($I_{OLED}$) corresponding to a voltage between the source and the gate and flowing from the drain, a first capacitor (C1, C11) having a first and a second electrode for storing a voltage corresponding to the corresponding one of the data signals; and a switching transistor (M2, M12) having a source, a drain and a gate for transmitting the corresponding one of the data signals to the first capacitor (C1, C11) in response to the first pulse of the corresponding one of the select signals, wherein the switching transistor (M2, M12) is coupled with its source to the corresponding data line (D1-Dm), with its gate to the corresponding select scan line (S1-Sn) and with its drain to the second electrode of the first capacitor (C1, C11); the first capacitor (C1, C11) is coupled with its first electrode to the source of the driving transistor (M1, M11) and with its second electrode to the gate of the driving transistor (M1, M11); and the driving transistor (M1, M11) being coupled with its source to a power line providing a power supply voltage (VDD), with its gate to the drain of the switching transistor (M2, M12), and with its drain to the source of the plurality of emission control transistors (M3a, M3b);
wherein at least one unit pixel of the unit pixels (110) is adapted to receive the corresponding one of the data signals in response to the first pulse of the corresponding one of the select signals, and
wherein the driving transistor of the at least one unit pixel supplies a driving current to the first light emitting diode element ($OLED_{R1}$) included in the at least one unit pixel in response to an emit pulse of the corresponding emission control signal such that the first light emitting diode element ($OLED_{R1}$) emits light in the first subfield (1F), and
wherein the driving transistor of the at least one unit pixel supplies a driving current to the second light emitting diode element ($OLED_{R2}$) included in the at least one unit pixel in response to an emit pulse of the corresponding emission control signal such that the second light emitting diode element ($OLED_{R2}$) emits light in the second subfields (2F),

**characterized in that**
the first shift register (210a) is adapted to receive a clock signal (VCLK), the inverted clock signal (NCLK) and a first start signal (VSP1), and comprises a first chain of flip-flops (FF11 to FF1(n+1)), wherein a first flip-flop (FF11) of the first chain of flip-flops (FF11 to FF1(n+1)) has the first start signal (VSP1), the clock signal (VCLK) and the inverted clock signal (/VCLK) as input, a subsequent flip-flop (FF12) has the output of the previous flip-flop (FF11), the clock signal (VCLK) and the inverted clock signal (/VCLK) as input, wherein the outputs of two adjacent flip-flops (FF11, FF12) of the first chain of flip-flops (FF11 to FF1(n+1)) are inputed to a NAND-gate, which generates a select signal, and
wherein the second shift register (220a) is adapted to receive the clock signal (VCLK), the inverted clock signal (/VCLK) and a second start signal (VSP2) as input and comprises a second chain of flip-flops (FF21-FF2n), wherein a first flip-flop (FF21) of the second chain of flip-flops (FF21 to FF2n) has the second start signal (VSP2), the clock signal (VCLK) and the inverted clock signal (/VCLK) as input, a subsequent flip-flop (FF22) has the output of the previous flip-flop (FF21) in the second chain, the clock signal (VCLK) and the inverted clock signal (/VCLK) as input, wherein the output of each flip-flop (FF21, FF22) of the second chain of flip-flops (FF21 to FF2n) is the second emit signal (EM21) and the first emitsignal (EMI11) corresponds to the second emit signal (EM21) inverted.

2. The display device of claim 1, wherein the pixel driver further comprises:

a second capacitor (C12) for storing a threshold voltage of the driving transistor (M11), the second capacitor (C12) having a first and a second electrode and being coupled with its first electrode to the second electrode of the first capacitor (C11) and with its second electrode to the gate of the driving transistor (M11),
a third transistor (M14) coupled between the gate and the drain of the driving transistor (M11) and coupled with its gate to the previous one of the select scan lines (S1-Sn),
a fourth transistor (M15) coupled between the power line supplying the power supply voltage (VDD) and the first electrode of the second capacitor (C12) and coupled with its gate to the previous one of the select scan lines (S1-Sn), and
wherein the voltage between the source and the gate of the driving transistor (M11) is determined by a voltage stored in the first and second capacitors (C11, C12).

**Patentansprüche**

1. Anzeigevorrichtung, umfassend:

eine Mehrzahl von in Reihen angeordneten Einheitspixeln (110) zum Anzeigen eines Bildes während eines Videosignalfeldes, wobei das Feld in eine Mehrzahl von Unterfeldern mit einem ersten Unterfeld (1 F) und einem zweiten Unterfeld (2F) unterteilt ist und wobei jedes der Einheitspixel (110) eine Mehrzahl von Leuchtdiodenelementen mit ersten und zweiten Leuchtdiodenelementen ($OLED_{R1}$, $OLED_{R2}$) beinhaltet, eine Mehrzahl von Ausgabesteuerungstransistoren (M3a, M3b), wobei die Mehrzahl von Leuchtdiodenelementen ($OLED_{R1}$, $OLED_{R2}$) des einen Einheitspixels (110) in einer Spaltenrichtung angeordnet ist und eine direkt mit einer Versorgungsspannung (VSS) verbundene Kathode aufweist, wobei jedes Leuchtdiodenelement ($OLED_{R1}$, $OLED_{R2}$) mit einem Drain eines entsprechenden Ausgabesteuerungstransistors (M3a, M3b) verbunden ist;
eine Mehrzahl von sich in der Spaltenrichtung erstreckenden Datenzeilen (D1-Dm) zum Übertragen von Datensignalen;
eine Mehrzahl von sich in einer Reihenrichtung erstreckenden Auswahlabtastzeilen (S1-Sn) zum Übertragen von Auswahlsignalen, wobei jede der Auswahlabtastzeilen (S1-Sn) mit einer entsprechenden Reihe der Einheitspixel (110) gekoppelt ist;
eine Mehrzahl von Ausgabeabtastzeilen (Em11-Em2n) zum Übertragen von Ausgabesteuerungssignalen, wobei jede der Ausgabeabtastzeilen (Em11-Em2n) mit einem Gate eines entsprechenden Ausgabesteuerungstransistors (M3a, M3b) gekoppelt ist; und
einen Datentreiber (300) zum Übertragen eines Datensignals an mindestens eine der Datenzeilen (D1-Dm) der Einheitspixel (110), der mit einer entsprechenden Auswahlzeile (S1-Sn), an die das Auswahlsignal angelegt wird, gekoppelt ist, und
einen Abtasttreiber (200) zum Anlegen der Auswahlsignale an die Auswahlabtastzeilen (S1-Sn) und zum Anlegen der Ausgabesteuerungssignale an die Ausgabeabtastzeilen (Em11-Em2n) in jedem der Mehrzahl von Unterfeldern (1 F, 2F), wobei der Abtasttreiber ein erstes Schieberegister zum sequentiellen Ausgeben der Mehrzahl von Auswahlsignalen in jedem der Mehrzahl von Unterfeldern und ein zweites Schieberegister zum sequentiellen Ausgeben der ersten und zweiten Ausgabesteuerungssignale umfasst,
einen Pixeltreiber (115, 115') für jedes der Einheitspixel (110) zum Speichern des entsprechenden Datensignals als Reaktion auf einen ersten Impuls eines entsprechenden Auswahlsignals in jeder der Mehrzahl von Unterfeldern (1 F, 2F) und zum Ausgeben eines Treiberstroms ($I_{OLED}$), der dem entsprechenden Datensignal des Pixeltreibers (115, 115') entspricht, umfassend einen Treibertransistor (M1, M11) mit einer Source, einem Gate und einem Drain zum Bereitstellen eines Treiberstroms ($I_{OLED}$), der einer Spannung zwischen der Source und dem Gate entspricht und vom Drain fließt, einen ersten Kondensator (C1, C11) mit einer ersten und einer zweiten Elektrode zum Speichern einer Spannung, die dem entsprechenden Datensignal entspricht; und einen Schalttransistor (M2, M12) mit einer Source, einem Drain und einem Gate zum Übertragen des entsprechenden Datensignals an den ersten Kondensator (C1, C11) als Reaktion auf den ersten Impuls des entsprechenden Auswahlsignals, wobei der Schalttransistor (M2, M12) mit seiner Source an die entsprechende Datenzeile (D1-Dm), mit seinem Gate an die entsprechende Auswahlabtastzeile (S1-Sn) und mit seinem Drain an die zweite Elektrode des ersten Kondensators (C1, C11) gekoppelt ist; wobei der erste Kondensator (C1, C11) mit seiner ersten Elektrode an die Source des Treibertransistors (M1, M11) und mit seiner zweiten Elektrode an das Gate des Treibertransistors (M1, M11) gekoppelt ist; und wobei der Treibertransistor (M1, M11) mit seiner Source an eine Übertragungsleitung, die eine Versorgungsspannung (VDD) bereitstellt, mit seinem Gate an den Drain des Schalttransistors (M2, M12) und mit seinem Drain an die Source der Mehrzahl von Ausgabesteuerungstransistoren (M3a, M3b) gekoppelt ist;

wobei mindestens eines der Einheitspixel (110) geeignet ist, um das entsprechende Datensignal als Reaktion auf den ersten Impuls des entsprechenden Auswahlsignals zu empfangen, und

wobei der Treibertransistor des mindestens einen Einheitspixels einen Treiberstrom an das erste Leuchtdiodenelement (OLED$_{R1}$) in dem mindestens einen Einheitspixel als Reaktion auf einen Ausgabeimpuls des entsprechenden Ausgabesteuerungssignals bereitstellt, sodass das erste Leuchtdiodenelement (OLED$_{R1}$) im ersten Unterfeld (1F) leuchtet, und

wobei der Treibertransistor des mindestens einen Einheitspixels einen Treiberstrom an das zweite Leuchtdiodenelement (OLED$_{R2}$) in dem mindestens einen Einheitspixel als Reaktion auf einen Ausgabeimpuls des entsprechenden Ausgabesteuerungssignals bereitstellt, sodass das zweite Leuchtdiodenelement (OLED$_{R2}$) im zweiten Unterfeld (2F) leuchtet,

**dadurch gekennzeichnet, dass**

das erste Schieberegister (210a) geeignet ist, um ein Taktsignal (VCLK), das inverse Taktsignal (/VCLK) und ein erstes Startsignal (VSP1) zu empfangen, und eine erste Kette von Flipflops (FF11 bis FF1 (n+1)) umfasst, wobei ein erstes Flipflop (FF11) der ersten Kette von Flipflops (FF11 bis FF1(n+1)) das erste Startsignal (VSP1), das Taktsignal (VCLK) und das inverse Taktsignal (/VCLK) als Eingang aufweist, ein darauffolgendes Flipflop (FF12) die Ausgabe des vorherigen Flipflops (FFI1), das Taktsignal (VCLK) und das inverse Taktsignal (/VCLK) als Eingang aufweist, wobei die Ausgänge von zwei benachbarten Flipflops (FF11, FF12) der ersten Kette von Flipflops (FF11 bis FF1 (N+1)) einem ein NAND-Gate zugeführt werden, das ein Auswahlsignal generiert, und

wobei das zweite Schieberegister (220a) geeignet ist, um das Taktsignal (VCLK), das inverse Taktsignal (/VCLK) und ein zweites Startsignal (VSP2) als Eingabe zu empfangen, und ein zweite Kette von Flipflops (FF21 bis FF2n) umfasst, wobei ein erstes Flipflop (FF21) der zweiten Kette von Flipflops (FF21 bis FF2n) das zweite Startsignal (VSP2), das Taktsignal (VCLK) und das inverse Taktsignal (/VCLK) als Eingabe aufweist, ein darauffolgendes Flipflop (FF22) die Ausgabe des vorherigen Flipflops (FF21) in der zweiten Kette, das Taktsignal (VCLK) und das inverse Taktsignal (/VCLK) als Eingang aufweist, wobei die Ausgabe jedes Flipflops (FF21, FF22) der zweiten Kette von Flipflops (FF21 bis FF2n) das zweite Ausgabesignal (EM21) ist und das erste Ausgabesignal (EM11) dem inversen zweiten Ausgabesignal (EM21) entspricht.

**2.** Anzeigevorrichtung nach Anspruch 1, wobei der Pixeltreiber Folgendes umfasst:

einen zweiten Kondensator (C12) zum Speichern einer Schwellenspannung des Treibertransistors (M11), wobei der zweite Kondensator (C12) eine erste und eine zweite Elektrode aufweist und mit seiner ersten Elektrode an die zweite Elektrode des ersten Kondensators (C11) und mit seiner zweiten Elektrode an das Gate des Treibertransistors (M11) gekoppelt ist; einen dritten Transistor (M14), der zwischen dem Gate und dem Drain des Treibertransistors (M11) eingekoppelt und mit seinem Gate an die vorherige Auswahlabtastzeile (S1-Sn) gekoppelt ist,

einen vierten Transistor (M15), der zwischen der Leitung, welche die Versorgungsspannung (VDD) bereitstellt, und der ersten Elektrode des zweiten Kondensators (C12) eingekoppelt und mit seinem Gate an die vorherige Auswahlabtastzeile (S1-Sn) gekoppelt ist, und

wobei die Spannung zwischen der Source und dem Gate des Treibertransistors (M11) durch eine im ersten und zweiten Kondensator (C11, C12) gespeicherte Spannung bestimmt wird.

**Revendications**

**1.** Dispositif d'affichage comprenant :

une pluralité de pixels unitaires (110) agencée en rangées et destinée à afficher une image durant une trame d'un signal vidéo, la trame étant divisée en une pluralité de sous-trames incluant une première sous-trame (1 F) et une seconde sous-trame (2F), et chacun des pixels unitaires (110) incluant une pluralité de diodes électroluminescentes élémentaires incluant des première et deuxième diodes électroluminescentes élémentaires (OLED$_{R1}$, OLED$_{R2}$), une pluralité de transistors (M3a, M3b) de commande d'émission, la pluralité de diodes électroluminescentes élémentaires (OLED$_{R1}$, OLED$_{R2}$) d'un même pixel unitaire (110) étant agencée dans la direction des colonnes et ayant une cathode connectée directement à une tension (VSS) d'alimentation, dans lequel chaque diode électroluminescente élémentaire (OLED$_{R1}$, OLED$_{R2}$) est connectée au drain d'un transistor correspondant (M3a, M3b) de commande d'émission ;

une pluralité de lignes (D1 à Dm) de donnée s'étendant dans la direction des colonnes et destinée à transmettre des signaux de donnée ;

une pluralité de lignes de balayage (S1 à Sn) de sélection s'étendant dans la direction des rangées et destinée à transmettre des signaux de sélection,

chacune des lignes de balayage (S1 à Sn) de sélection étant raccordée à l'une, correspondante, des rangées de pixels unitaires (110) ;

une pluralité de lignes de balayage (Em11 à Em2n) d'émission destinée à transmettre des signaux de commande d'émission, chacune des lignes de balayage (Em11 à Em2n) d'émission étant raccordée à la grille de l'un, correspondant, des transistors (M3a, M3b) de commande d'émission ; et

un circuit d'attaque (300) de donnée destiné à transmettre un signal de donnée à au moins l'une des lignes (D1 à Dm) de donnée des pixels unitaires (110) raccordée à l'une, correspondante, des lignes (S1 à Sn) de sélection à laquelle est appliqué l'un des signaux de sélection, et

un circuit d'attaque (200) de balayage destiné à appliquer les signaux de sélection aux lignes de balayage (S1 à Sn) de sélection et à appliquer les signaux de commande d'émission aux lignes de balayage (Em11 à Em2n) d'émission dans chacune de la pluralité de sous-trames (1 F, 2F), dans lequel le circuit d'attaque de balayage comprend un premier registre à décalage destiné à sortir séquentiellement la pluralité de signaux de sélection dans chacune de la pluralité de sous-trames ; et un second registre à décalage destiné à sortir séquentiellement les premier et second signaux de commande d'émission,

un circuit d'attaque (115, 115') de pixel pour chacun des pixels unitaires (110) destiné à mémoriser le signal correspondant des signaux de donnée en réponse à une première impulsion de l'un, correspondant, des signaux de sélection dans chacune de la pluralité de sous-trames (1 F, 2F), et à sortir un courant d'attaque (I$_{OLED}$) correspondant au signal correspondant des signaux de donnée, le circuit d'attaque (115, 115') de pixel comprenant : un transistor d'attaque (M1, M11) ayant une source, une grille et un drain, destiné à fournir un courant d'attaque (I$_{OLED}$) correspondant à la tension entre la source et la grille et s'écoulant à partir du drain, un premier condensateur (C1, C11) ayant une première et une seconde électrode, destiné à emmagasiner une tension correspondant au signal correspondant des signaux de donnée ; et un transistor de commutation (M2, M12) ayant une source, un drain et une grille,

destiné à transmettre le signal correspondant des signaux de données au premier condensateur (C1, C11) en réponse à la première impulsion du signal correspondant des signaux de sélection, dans lequel le transistor de commutation (M2, M12) est raccordé par sa source à la ligne (D1 à Dm) de donnée correspondante, par sa grille à la ligne (S1 à Sn) de balayage de sélection correspondante et par son drain à la seconde électrode du premier condensateur (C1, C11) ; le premier condensateur (C1, C11) est raccordé par sa première électrode à la source du transistor d'attaque (M1, M11) et par sa seconde électrode à la grille du transistor d'attaque (M1, M11) ; et le transistor d'attaque (M1, M11) étant raccordé par sa source à une ligne d'alimentation fournissant une tension (VDD) d'alimentation, par sa grille au drain du transistor de commutation (M2, M12) et par son drain à la source de la pluralité de transistors (M3a, M3b) de commande d'émission ;

dans lequel au moins un pixel unitaire des pixels unitaires (110) est apte à recevoir celui le signal correspondant des signaux de donnée en réponse à la première impulsion du signal correspondant des signaux de sélection, et

dans lequel le transistor d'attaque de l'au moins un pixel unitaire délivre un courant d'attaque à la première diode électroluminescente élémentaire (OLED$_{R1}$) incluse dans l'au moins un pixel unitaire en réponse à une impulsion d'émission du signal correspondant de commande d'émission de sorte que la première diode électroluminescente élémentaire (OLED$_{R1}$) émet de la lumière dans la première sous-trame (1F), et

dans lequel le transistor d'attaque de l'au moins un pixel unitaire délivre un courant d'attaque à la deuxième diode électroluminescente élémentaire (OLED$_{R2}$) incluse dans l'au moins un pixel unitaire en réponse à une impulsion d'émission du signal correspondant de commande d'émission de sorte que la deuxième diode électroluminescente élémentaire (OLED$_{R2}$) émet de la lumière dans la seconde sous-trame (2F),

**caractérisé en ce que** le premier registre à décalage (210a) est apte à recevoir un signal d'horloge (VCLK), le signal d'horloge inversé (/VCLK) et un premier signal de départ (VSP1), et comprend une première chaîne de bascules (FF11 à FF1(n+1)), dans lequel une première bascule (FF11) de la première chaîne de bascules (FF11 à FF1(n+1)) a, comme entrée, le premier signal de départ (VSP1), le signal d'horloge (VCLK) et le signal d'horloge inversé (/VCLK), la bascule (FF12) qui suit a, comme entrée, la sortie de la bascule précédente (FF11), le signal d'horloge (VCLK) et le signal d'horloge inversé (/VCLK), dans lequel les sorties de deux bascules adjacentes (FF11, FF12) de la première chaîne de bascules (FF11 à FF1(n+1)) entrent dans une porte NON-ET, qui engendre un signal de sélection, et dans lequel le second registre à décalage (220a) est apte à recevoir, comme entrée, le signal d'horloge (VCLK), le signal d'horloge inversé (/VCLK) et un second signal de départ (VSP2), et comprend une seconde chaîne de bascules (FF21 à FF2n), dans lequel une première bascule (FF21) de la seconde chaîne de bascules (FF21 à FF2n) a, comme entrée, le second signal de départ (VSP2), le signal d'horloge (VCLK) et le signal d'horloge inversé (/VCLK), la bascule (FF22) qui suit a, comme entrée, la sortie de la bascule précédente (FF21) de la seconde chaîne, le signal d'horloge (VCLK) et le signal d'horloge inversé (/VCLK), dans lequel la sortie de chaque bascule (FF21, FF22) de la seconde chaîne de bascules (FF21 à FF2n) est le second signal d'émission (EM21), et le premier signal d'émission (EM11) correspond au second signal d'émission (EM21) inversé.

2. Dispositif d'affichage selon la revendication 1, dans lequel le circuit d'attaque de pixel comprend en outre :

un second condensateur (C12) destiné à emmagasiner une tension de seuil du transistor d'attaque (M11), le second condensateur (C12) ayant une première et une seconde électrode et étant raccordé par sa première électrode à la seconde électrode du premier condensateur (C11) et par sa seconde électrode à la grille du transistor d'attaque (M11) ;
un troisième transistor (M14) raccordé entre la grille et le drain du transistor d'attaque (M11) et raccordé par sa grille à la ligne précédente des lignes de balayage (S1 à Sn) de sélection ;
un quatrième transistor (M15) raccordé entre la ligne d'alimentation délivrant la tension d'alimentation (VDD) et la première électrode du second condensateur (C12), et raccordé par sa grille la ligne précédente des lignes de balayage (S1 à Sn) de sélection, et
dans lequel la tension entre la source et la grille du transistor d'attaque (M11) est déterminée par une tension emmagasinée dans les premier et second condensateurs (C11, C12).

# Fig. 1

# Fig. 2

EP 1 679 687 B1

# Fig. 3

# Fig. 4

EP 1 679 687 B1

# Fig. 5

# Fig. 6

# Fig. 7

select [i-1]

select [i]

emit1 [i]"

# Fig. 8

# Fig. 9

# Fig. 10

# Fig. 11

# Fig. 12

# Fig. 13

# Fig. 14

# Fig. 15

# Fig. 16

# Fig. 17

# Fig. 18

# Fig. 19

# Fig. 20

# Fig. 21

# Fig. 22

**Fig. 23**

200h

# Fig. 24

200i

# Fig. 25

# Fig. 26

200j

# Fig. 27

# Fig. 28

# Fig. 29

EP 1 679 687 B1

# Fig. 30A

# Fig. 30B

# Fig. 31

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003122306 A
- EP 1600924 A1
- EP 1441325 A2